# EUROPÄISCHE PATENTSCHRIFT

(11) **EP 2 040 902 B1**
(45) Veröffentlichungstag und Bekanntmachung des Hinweises auf die Patenterteilung: **22.08.2018**
(21) Anmeldenummer: 07765643.7
(22) Anmeldetag: 26.06.2007
(51) Int. Cl.: B29C 45/76, B29C 47/92, G05B 19/406, B29C 47/08

(54) **VORRICHTUNG UND VERFAHREN ZUR BENUTZERSPEZIFISCHEN ÜBERWACHUNG UND REGELUNG DER PRODUKTION**
APPARATUS AND METHOD FOR USER-SPECIFIC PRODUCTION MONITORING AND REGULATION
INSTALLATION ET PROCÉDÉ DE SURVEILLANCE SPÉCIFIQUE À UN UTILISATEUR ET DE RÉGLAGE D'UN PROCESSUS DE PRODUCTION

(30) Priorität: 06.07.2006 DE 102006031268
(43) Veröffentlichungstag der Anmeldung: 01.04.2009
(60) Teilanmeldung: 12186441.7
(73) Patentinhaber: KraussMaffei Technologies GmbH, 80997 München (DE)
(72) Erfinder: BETSCHE, Markus, 83026 Rosenheim (DE); GRIMM, Günther, 86567 Hilgertshausen (DE); WYRWOLL, Arno, 80999 München (DE)
(74) Vertreter: Wilhelm, Ludwig
(86) Internationale Anmeldenummer: PCT/EP2007/056382
(87) Internationale Veröffentlichungsnummer: WO 2008/003618

(56) Entgegenhaltungen:
- CA-A1- 2 576 883
- US-A- 5 470 218
- US-A1- 2005 027 380

## Beschreibung

Die vorliegende Erfindung betrifft eine Vorrichtung und ein Verfahren zur benutzerspezifischen Überwachung und Regelung der Produktion, insbesondere derartige Vorrichtungen und Verfahren für die Verarbeitung von Kunststoffen zu bestimmten Produkten. Zur Vereinfachung soll die Erfindung im Folgenden anhand von Vorrichtungen zur Verarbeitung von Kunststoffen beschrieben werden. Allerdings soll dies den Gegenstand dieser Erfindung nicht beschränken, welcher vielmehr beliebige Produktionsmaschinen erfasst.

Vorrichtungen zur Verarbeitung von Kunststoffen, wie insbesondere Extrusionsmaschinen oder Spritzgussmaschinen, formen in einer vorbestimmten Abfolge einzelner, über vorbestimmte Prozessparameter steuerbarer Verarbeitungsprozesse die genannten Kunststoffprodukte.

Diese Produkte müssen einerseits oftmals immer höheren Qualitätsanforderungen genügen. Andererseits werden meist große Stückzahlen von einer Reihe von Anbietern produziert, so dass das Produktangebot relativ groß, die zu erzielenden Produktverkaufspreise vergleichsweise klein und dementsprechend der Druck auf die Hersteller zur Einsparung von Kosten, insbesondere zur Reduktion der Energiekosten stetig wächst. Dies erfordert eine genaue Qualitäts-, Produktivitäts- und Kontrolle kostenrelevanter Größen, wie insbesondere des Energieeinsatzes zur Produktion.

Aus der US 5,470,218 ist eine Spritzblasformvorrichtung bekannt, bei welcher mehrere Prozessparameter in einer Steuerungseinrichtung eingegeben und überwacht werden. Bei Überschreiten vorgegebener Grenzwerte der Prozessparamater wird ein Alarm ausgelöst. Die Prozessparameter können in vielfältiger Weise graphisch dargestellt werden. Einer der überwachten und dargestellten Prozessparameter ist zum Beispiel die Zykluszeit, welche gemessen wird.

Aus der CA 2 576 883 A1 ist eine Spritzgießmaschine mit EDV-technischer Integration von betrieblichen Abläufen bekannt. Mittels mehrerer Aufzeichnungsmittel werden Informationen eingeholt und mit Auswertungsmitteln der Steuerungseinrichtung im Wesentlichen in Echtzeit ausgewertet. Die Steuerungseinrichtung der Spritzgießmaschine kann mit einem Datennetz und einem Datendienstendgerät verbunden sein. Die Steuerungseinrichtung kann in dem Datennetz Datendienste zur Verfügung stellen, durch welche eine Kommunikation zwischen dem Datendienstendgerät und der Steuerungseinrichtung möglich ist. Die Steuerungseinrichtung kann von dem Datendienstendgerät Informationen empfangen, welche in Speichermitteln gespeichert werden können.

Beim Einsatz von Vorrichtungen nach dem Stand der Technik können jedoch die Kosten für ein bestimmtes Produkt allenfalls im Durchschnitt, die Gestehungskosten für ein bestimmtes Produktionslos nur ungefähr bestimmt werden, da hier zahlreiche Durchschnitts- oder Erfahrungswerte wie unter anderem Energie- oder Wartungskosten einer Maschine einfließen. Zudem können diese Werte oftmals erst nach der Produktion angegeben werden, weil vorher nicht alle relevanten Parameter zu Verfügung stehen.

Ein weiterer Nachteil bei bekannten Vorrichtungen ergibt sich daraus, dass für deren Wartung auf Erfahrung basierende, feste Zeitintervalle angesetzt werden. Dadurch werden diese Vorrichtungen in der Regel zu früh gewartet, wodurch unnötige Stillstandzeiten und Kosten entstehen.
Andererseits kann es sich jedoch auch ergeben, dass bereits innerhalb einer solchen üblicherweise ausreichenden, festen Wartungsintervalldauer aufgrund von erhöhtem Verschleiß eine Wartung nötig ist. In diesem Fall wird ein Schaden an der Vorrichtung sowie insbesondere an den zur Formgebung eingesetzten Spritzgusswerkzeugen meist erst zu spät erkannt. Auch dies resultiert in zusätzlichen Aufwendungen in Form von Instandsetzungskosten und wiederum Stillstandzeiten.
Es ist daher die Aufgabe der vorliegenden Erfindung, eine Vorrichtung und ein Verfahren zur Verarbeitung von Kunststoffen zur Verfügung zu stellen, welche die Nachteile des Standes der Technik überwinden und insbesondere eine benutzerspezifische Überwachung und Regelung der Verarbeitung ermöglichen. Ziel dabei ist bevorzugt die Effizienzsteigerung, insbesondere hinsichtlich der für eine vorgegebene Menge eines vorbestimmten Produktes eingesetzten Energie, und die Verringerung von Aufwendungen für Wartung und Instandsetzung
Die Aufgabe wird erfindungsgemäß durch eine Vorrichtung zur Verarbeitung von Kunststoffen mit den Merkmalen gemäß Anspruch 1 gelöst. Das erfindungsgemäße Verfahren ist Gegenstand des Anspruchs 23. Bevorzugte Ausführungsformen, Weiterbildungen und Verfahrensergänzungen sind Gegenstand der Unteransprüche.
Die erfindungsgemäße Vorrichtung ist wenigstens zur benutzerspezifischen Überwachung der Verarbeitung von Kunststoffen in einer vorbestimmten Abfolge einzelner, über vorbestimmte Prozessparameter steuerbarer Verarbeitungsprozesse ausgestaltet.

Dazu weist die Vorrichtung erfindungsgemäß wenigstens eine Materialzuführungseinrichtung auf, welche in wenigstens einem Verarbeitungsprozess den zu verarbeitenden Kunststoff als Rohmaterial zuführt. Zudem ist wenigstens eine Plastifiziereinrichtung vorgesehen, welche in wenigstens einem weiteren Verarbeitungsprozess das zugeführte Rohmaterial plastifiziert und/oder homogenisiert.
Weiterhin weist die Vorrichtung gemäß dieser Erfindung wenigstens eine Formgebungseinrichtung auf, insbesondere ein Spritzgusswerkzeug, welche das plastifizierte und/oder homogenisierte Rohmaterial in wenigstens einem weiteren Verarbeitungsprozess zu einem Produkt formt. Dieses Produkt wird der Formgebungseinrichtung nach einer vorbestimmten Abkühl- und/oder Aushärtezeit entnommen. Die beschriebene Abfolge der Verarbeitungsprozesse zwischen Zuführung des Rohmaterials und der Entnahme des Produkts definiert - nach einer vorbestimmten Produktionsanfahrzeit der Vorrichtung - einen Produktzyklus.
Erfindungsgemäß weist die Vorrichtung wenigstens eine Steuerungseinrichtung auf, welche die Verarbeitung über wenigstens eine Verarbeitungssteuergröße, nämlich über wenigstens einen der Prozessparameter - steuert. Die Steuerungseinrichtung ist mit wenigstens einer Eingabeeinrichtung datenverbunden. Als datenverbindbar wird im Rahmen dieser Erfindung verstanden, dass wenigstens zwei Einrichtungen über eine Verbindung zur Übermittlung von Daten verbunden sind. Diese Datenverbindung kann sowohl drahtgebunden, als auch drahtlos ausgestaltet sein. Bevorzugt wird die Datenverbindung mittels gemäß üblicher Standards spezifizierter Datenverbindungen realisiert, wie beispielsweise I²C, RS-232, LAN für drahtgebundene, oder WLAN, Bluetooth für drahtlose Datenverbindung. Es können jedoch auch optische Datenverbindungen über Glasfaser oder Infrarotstrecken zur Anwendung kommen.
Über die Eingabeeinrichtung kann wenigstens ein Wert einer Verarbeitungseingabegröße, wie insbesondere die Kosten der Vorrichtung, des Rohmaterials, der Energie, der Formgebungseinrichtungen, der Abschreibung, der Zinsen und/oder des Personals, Verarbeitungsmenge eingegeben. Bevorzugt kann über die Eingabeeinrichtung zudem wenigstens ein Sollwert wenigstens einer Verarbeitungssteuerungsgröße vorgegeben werden.

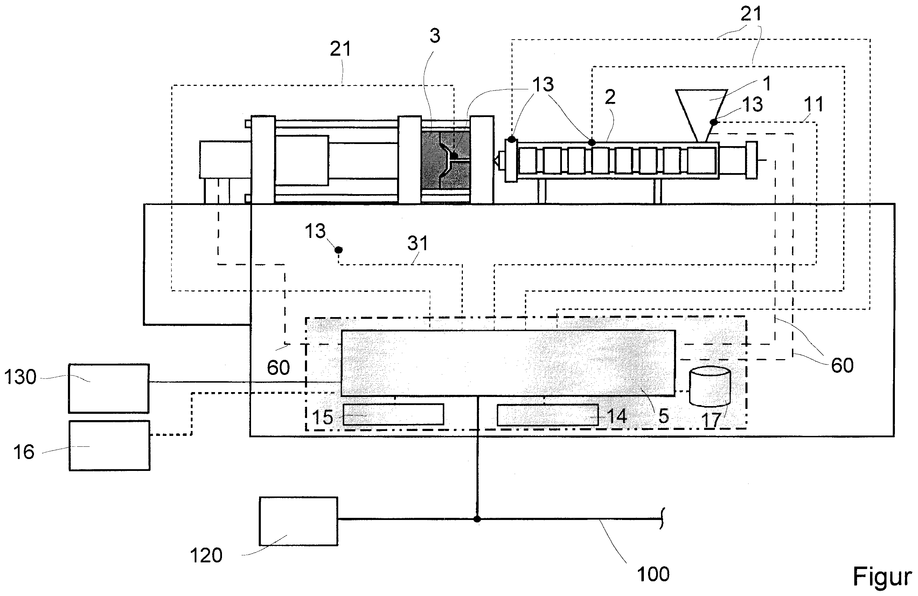

In bestimmten Ausführungsformen weist die Vorrichtung wenigstens eine Datenschnittstelle auf, über welche die Verarbeitungseingabegrößen wie Schwankungen der Rohmaterialkosten und andere Einflüsse seitens externer Eingabeeinrichtung, beispielsweise über einen Zentralrechner, eingeben werden können. Als Eingabeeinrichtung können zudem Peripheriegeräte dienen, aus denen sich ebenfalls Verarbeitungseingabegrößen in Form von Daten mit einbinden lassen. Erfindungsgemäß ist ferner wenigstens eine Prozessoreinrichtung mit der Steuerungseinrichtung datenverbunden. Mit Hilfe der Prozessoreinrichtung ist aus wenigstens einer vorbestimmten Verarbeitungssteuerungsgröße und/oder wenigstens einer vorbestimmten Verarbeitungseingabegröße wenigstens eine vorbestimmte Verarbeitungsüberwachungsgröße im Wesentlichen in Echtzeit ermittelbar.
Als typischerweise den Bediener der Vorrichtung interessierende Verarbeitungsüberwachungsgrößen kommen insbesondere Produktzyklusdauer, Produktkosten, Produktqualität, Rohmaterial- und/oder Energieeinsatz pro Produktzyklus in Betracht und ferner - damit im Zusammenhang stehend - der zu erwartende Rohmaterialbedarf, die zu erwartende Produktionsdauer und/oder die zu erwartenden Gestehungskosten für eine vorgegebene Menge eines vorbestimmten Produktes, die Produktfehlerwahrscheinlichkeit, die Produktfehlerhäufigkeit, die Anzahl von Produktzyklen bis zu einer Wartung, Kalibrierung und/oder einem Austausch von Teilen der Vorrichtung, insbesondere der Formgebungseinrichtung, die Wartungs- und Instandsetzungskosten und/oder die Produktionsanfahrzeit und/oder -kosten.
Gemäß der vorliegenden Erfindung ist die Steuerungseinrichtung mit wenigstens einer Ausgabeeinrichtung datenverbunden Über die erfindungsgemäße Ausgabeeinrichtung kann wenigstens ein Wert wenigstens einer Verarbeitungsüberwachungsgröße, insbesondere der Ist-, Soll-, Durchschnittswert, der seit dem Anfahren der Vorrichtung integrierte Wert, dessen Historie und/oder die Tendenz ausgegeben werden. Vorzugsweise kann wenigstens einer dieser Werte über ein Kennfeld dargestellt werden.
Bevorzugt sind über die Ausgabeeinrichtung direkt die Istwerte vorrichtungsbedingter Verarbeitungsüberwachungsgrößen wie Produktzyklusdauer, Ausschussrate (Toleranzüberwachung), Stillstandszeiten, Energieeinsatz, Wasser- und Luftverbrauch darstellbar und können die sich daraus ergebenden Verbrauchsraten abgeschätzt und dokumentiert werden.
Vorzugsweise erlaubt die Vorrichtung für jedes Produktionslos einen Vergleich der Soll- zur Ist-Situation vorbestimmter Verarbeitungsüberwachungsgrößen darzustellen, und besonders bevorzugt neben den Istwerten auch deren Historie und die sich aufgrund der Historie ergebende Prognose.
Die erfindungsgemäße Vorrichtung bietet damit ihrem Bediener den Vorteil, den Produktionserfolg nicht mühsam über einzelne Toleranzen beurteilen zu müssen, sondern erlaubt durch eine sinnvolle Kombination diverser Funktionalitäten der Vorrichtung eine zusammenhängende und direktere Bewertung bestimmter genau spezifizierbarer Produktionsziele. Diese lassen sich bei Vorrichtungen nach dem Stand der Technik - wenn überhaupt - erst später bewerten und können dann nicht mehr in den Optimierungsprozess einfließen, der ebenfalls Gegenstand dieser Erfindung ist.
In bevorzugten Ausführungsformen ermöglicht die Ausgabeeinrichtung die Abbildung einer Herstellungskostenkalkulation durch die Verknüpfung der insbesondere Kostengrößen betreffenden Verarbeitungseingabegrößen mit zumeist komplexen Verarbeitungsüberwachungsgrößen im Wesentlichen in Echtzeit. Vorzugsweise erfolgt die Abbildung der Herstellungskostenkalkulation auf einem Bildschirm mit Touchfunktionalität zur Steuerung der Vorrichtung, d.h. Eingabe- und Ausgabeeinrichtung können kombiniert werden.
Vorzugsweise handelt es sich bei der erfindungsgemäßen Vorrichtung um eine Extrusions- oder Spritzgussmaschine.
Gemäß einer bevorzugten Weiterbildung ist die erfindungsgemäße Vorrichtung ferner zur benutzerspezifischen Regelung der Verarbeitung von Kunststoffen eingerichtet. Dazu wird wenigstens eine Verarbeitungsüberwachungsgröße als Verarbeitungsregelungsgröße geregelt, indem die Steuerungseinrichtung ferner mit wenigstens einer Regelungseinrichtung datenverbindbar ist, welche wenigstens eine Verarbeitungsregelungsgröße gemäß wenigstens einem - bevorzugt über die Eingabeeinrichtung - vorgebbaren Regelungskriterium oder auf wenigstens einen vorgebbaren Sollwert regelt.
In einer bevorzugten Weiterbildung der erfindungsgemäßen Vorrichtung ist das wenigstens eine Regelungskriterium einer Gruppe entnommen, welche wenigstens minimale Produktzyklusdauer, d.h. größte Produktausstoßrate, minimalen Energieeinsatz pro Produktzyklus, minimale Produktkosten, minimale Gestehungskosten für eine vorgegebene Menge eines vorbestimmten Produktes, maximale Produktqualität, maximale Anzahl von Produktzyklen bis zu einer Wartung, Kalibrierung und/oder einem Austausch von Teilen der Vorrichtung, minimale Wartungs- und Instandsetzungskosten und/oder minimale Produktionsanfahrzeit und/oder -kosten enthält.

In der erfindungsgemäßen Vorrichtung ist die Prozessoreinrichtung mit wenigstens einer Speichereinrichtung datenverbunden in welcher wenigstens für wenigstens eine Verarbeitungsüberwachungsgröße wenigstens ein unterer und/oder ein oberer produktbezogener Erfahrungsgrenzwert gespeichert ist. In einer weiteren bevorzugten Ausführungsform der erfindungsgemäßen Vorrichtung überwacht die Prozessoreinrichtung bei der Regelung wenigstens einer Verarbeitungsregelungsgröße, wenigstens eine Verarbeitungsüberwachungsgröße derart, dass deren Istwerte den wenigstens einen unteren und/oder oberen Erfahrungsgrenzwert und/oder wenigstens einen - bevorzugt über die Eingabeeinrichtung - vorgegebbaren unteren und/oder oberen - bevorzugt produktbezogenen - Benutzergrenzwert nicht unter- bzw. überschreiten.

In einer bevorzugten Weiterbildung der erfindungsgemäßen Vorrichtung gibt die Steuerungseinrichtung bei der Über- oder Unterschreitung wenigstens eines Erfahrungs- und/oder Benutzergrenzwerts durch den Istwert der wenigstens einen Verarbeitungsüberwachungsgröße - insbesondere bei einer im Wesentlichen dauerhaften Über- oder Unterschreitung über eine vorgebbare Anzahl von Produktzyklen hinweg, ein entsprechendes Warnsignal und/oder eine Warnmeldung über die Ausgabeeinrichtung aus und/oder steuert die Vorrichtung in einen Sicherheitszustand oder schaltet diese ab.

In einer bevorzugten Ausführungsform der erfindungsgemäßen Vorrichtung ist die Steuerungseinrichtung mit wenigstens einer Messeinrichtung datenverbindbar, welche gesteuert durch die Steuerungseinrichtung laufend oder zu vorbestimmten Zeitpunkten während wenigstens eines vorbestimmten Verarbeitungsprozesses innerhalb wenigstens eines vorbestimmten Produktzyklusses wenigstens eine vorbestimmte Verarbeitungsmessgröße misst. Bevorzugt ist diese Verarbeitungsmessgröße einer Gruppe entnommen ist, welche wenigstens Fehler, Stillstandszeiten, insbesondere Rüst- und Wartungszeiten, und/oder Leistungsaufnahme der Vorrichtung, Temperatur, Abnutzung, Standzeiten und/oder Fehler der Formgebungseinrichtung, Temperatur und/oder Verbrauch des zur Abkühlung des Produkts eingesetzten Kühlmittels, Dauer wenigstens eines der Verarbeitungsprozesse, Umgebungstemperatur, Viskosität des für wenigstens eine hydraulische Einrichtung der Vorrichtung benutzen Öls und dergleichen enthält.

In einer weiteren bevorzugten Ausführungsform der erfindungsgemäßen Vorrichtung kann die Prozessoreinrichtung mit Hilfe der wenigstens einen Verarbeitungsmessgröße wenigstens einen Istwert wenigstens einer vorbestimmten Verarbeitungssteuerungs-, -überwachungs- und/oder -regelungsgröße, insbesondere die Produktzyklusdauer und/oder den Energieeinsatz pro Produktzyklus, ermitteln. Bevorzugt ist dabei insbesondere auch die Abweichung des jeweiligen Istwerts vom entsprechenden Sollwert ermittelbar.

In einer bevorzugten Weiterbildung der erfindungsgemäßen Vorrichtung ist wenigstens eine Abhängigkeit wenigstens einer Verarbeitungsüberwachungs- oder -regelungsgröße von wenigstens einer Verarbeitungssteuerungsgröße und/oder wenigstens einer anderen Verarbeitungsüberwachungs- und/oder -regelungsgröße als wenigstens eine Kennfunktion in Form einer vorbestimmten Anzahl diskreter - bevorzugt produktbezogener - Erfahrungswerttupel in der Speichereinrichtung gespeichert.

In einer bevorzugten Ausführungsform der erfindungsgemäßen Vorrichtung kann die Vorrichtung in wenigstens einem - bevorzugt produktbezogenen - Lernmodus betrieben werden. In diesem Lernmodus wird in wenigstens einer Messreihe bei automatischer Änderung des Sollwertes wenigstens einer vorbestimmten Verarbeitungssteuerungsgröße nach wenigstens einem Produktzyklus in vorbestimmten Schritten und ggf. vorbestimmten festen Werten wenigstens einer anderen Verarbeitungssteuerungsgröße mittels der wenigstens einen Messeinrichtung wenigstens eine vorbestimmte Verarbeitungsmessgröße gemessen. Mit Hilfe dieser wenigstens einen vorbestimmten Verarbeitungsmessgröße ermittelt die Prozessoreinrichtung den sich dabei einstellenden wenigstens einen Istwert wenigstens einer vorbestimmten Verarbeitungsregelungs- und/oder -überwachungsgröße und dadurch wenigstens eine Kennfunktion. Die Kennfunktion wird die in der Speichereinrichtung in Form einer vorbestimmten Anzahl diskreter - bevorzugt produktbezogener - Messwerttupel gespeichert.

Eine einfacher Lernmodus kann so ausgestalten sein, dass die Vorrichtung mit Prozessparametern, die typischerweise zur Optimierung der Produkte variiert werden, innerhalb sinnvoller Werteintervalle verschiedene Produktzyklen unter der Prämisse guter Produktqualität durchläuft. Zu den verschiedenen Prozessparametern dieser Produktzyklen werden die jeweiligen Energieeinsätze in den einzelnen Einrichtungen durch entsprechende Messeinrichtungen gemessen, in der Prozessoreinrichtung ausgewertet und in der Speichereinrichtung gespeichert. Das Ergebnis ist eine Kennfunktion (Gesamt-)Energieeinsatz pro Produktzyklus in Abhängigkeit der variierten Prozessparameter. Dieser Kennfunktion können dann die Prozessparameter für den energieeffizientesten Produktzyklus entnommen werden.

Ferner kann anhand der Energieeinsatz/Produktzyklus-Kennfunktion unter Berücksichtigung der jeweiligen Dauer der einzelnen Verarbeitungsprozesse der energetisch optimale Produktzyklus durch geeignete Prozessparameterwahl eingestellt werden.

In einer bevorzugten Ausführungsform kann, sofern dieser energetisch optimale Produktzyklus durch die entsprechende Prozessparameterwahl nicht erreicht wird, der Bediener über die Ausgabeeinrichtung aufgefordert werden, die Prozessparameter zu ändern oder ggf. eine Wartung der Vorrichtung oder des Spritzgusswerkzeugs durchzuführen. Diese produktionsabhängige Instandhaltung ist insofern vorteilhaft, als sie zu einer Erhöhung der durchschnittlichen Standzeiten der Vorrichtung führt, da sich die Instandsetzungsintervalle über die Prozessparameter am tatsächlichen Bedarf und nicht an festen Erfahrungswerten orientieren.

In einer weiteren bevorzugten Ausführungsform der erfindungsgemäßen Vorrichtung ermittelt die Prozessoreinrichtung auf Basis der wenigstens einen Messreihe für die wenigstens eine Verarbeitungseingabegröße wenigstens einen - bevorzugt über die Ausgabeeinrichtung ausgebbaren - Grenzwert, für den wenigstens eine Verarbeitungsüberwachungsgröße, insbesondere die Produktkosten, bei der Regelung wenigstens einer anderen Verarbeitungsregelungsgröße gemäß dem wenigstens einem Regelungskriterium oder auf den wenigstens einen vorbestimmten Sollwert, wenigstens einen vorbestimmten Überwachungsgrenzwert nicht über- oder unterschreitet.

In einer bevorzugten Weiterbildung der erfindungsgemäßen Vorrichtung ermittelt die Prozessoreinrichtung auf der Basis des wenigstens einen Istwerts und/oder der Historie wenigstens einer Verarbeitungsmess-, -überwachungs- und/oder -regelungsgröße, und wenigstens eines Erfahrungs- und/oder Benutzergrenzwerts für diese Größe, wie insbesondere die maximale Viskosität des in wenigstens einer hydraulischen Einrichtung verwendeten Öls, des maximalen Energieeinsatzes pro Produktionszyklus, wenigstens einen - bevorzugt über die Ausgabeeinrichtung ausgebbaren - Grenzwert für die maximale Anzahl weiterer Produktzyklen, bevor eine Wartung, Kalibrierung und/oder ein Austausch von Teilen der Vorrichtung, insbesondere der Formgebungseinrichtung, nötig ist. Dies hat den Vorteil, dass durch die damit realisierte Orientierung der Wartungs- und Instandsetzungsaktivitäten am entsprechenden Istbedarf, die damit verbundenen Kosten minimiert werden können. D.h. die erfindungsgemäße Vorrichtung ermöglicht gezieltere Instandhaltungsmaßnahmen und höhere Standzeiten.

Bevorzugt ermöglicht die Vorrichtung auf der Basis des wenigstens einen Istwerts und/oder der Historie wenigstens einer Verarbeitungsmess-, -überwachungs- und/oder -regelungsgröße den Verschleiß-Istwert und/oder -Fortschritt bestimmter Teile zu bewerten und zu überwachen. Sofern sich beispielsweise bei gleichem Spritzgusswerkzeug und gleicher Produktzyklusdauer der Energieeinsatz im Laufe der Produktionszeit erhöht, ist dies ein Indikator dafür, dass eine Wartung oder Inspektion der Vorrichtung nötig ist.

Vorzugsweise werden in einem solchen Fall weitere Verarbeitungsmess-, - überwachungs- und/oder -regelungsgrößen, die Auskunft über den Verschleiß geben können, durch die Prozessoreinrichtung hinsichtlich ihrer Benutzer- oder Erfahrungsgrenzwerte ausgewertet. Dadurch kann die Vorrichtung automatisch differenzieren, ob ein Ölwechsel bei einer hydraulisch angetriebenen Vorrichtung oder vielmehr eine Wartung des Spritzgusswerkzeuges nötig ist.

Als derartige Verschleißzustandsgrößen kommen insbesondere Verarbeitungsmess-, - überwachungs- und/oder -regelungsgrößen von Regelungsventilen, Pumpen und dergleichen in Betracht. Dazu ist die Vorrichtung bevorzugt geeignet, Langzeitüberwachung der genannten Größen innerhalb des Lebenszyklus der Vorrichtung vorzunehmen. Sofern die Prozessoreinrichtung eine vorbestimmte Abweichung einer dieser Größen aus einem vorbestimmten Toleranzfeld ermittelt, wird der Bediener über die Ausgabeeinrichtung daraufhin gewiesen, dass das entsprechende Verschleißteil, z. B. ein Ventil oder der gleichen zu kalibrieren oder auszutauschen ist.

Der Bediener der Vorrichtung wird ferner über die Ausgabeeinrichtung darüber informiert, welcher Größe sich nicht im Toleranzfeld befinden, kann somit selbst eine Diagnose über den Vorrichtungszustand erstellen und ggf. Teile neu kalibrieren oder austauschen. Eine Kalibrierung der Vorrichtung durch den Kundendienst des Herstellers der Vorrichtung kann somit entfallen. Der Bediener kalibriert die Vorrichtung vielmehr selbst nach Bedarf, wodurch sich wiederum Kosten einsparen lassen.

In einer bevorzugten Ausführungsform der erfindungsgemäßen Vorrichtung erfolgt die Regelung einer Verarbeitungsregelungsgröße dadurch, dass die Prozessoreinrichtung anhand wenigstens einer Kennfunktion dieser Verarbeitungsregelungsgröße deren Abhängigkeit von wenigstens einer Verarbeitungssteuerungsgröße betrachtet und wenigstens ein Mess- oder Erfahrungswert wenigstens einer Verarbeitungssteuerungsgröße ermittelt wird, für welchen der jeweilige Kennfunktionswert gemäß dem jeweiligen Regelungskriterium minimal, maximal oder den geringsten Differenzbetrag zum vorgegebenen Sollwert aufweist.

In einer weiteren bevorzugten Ausführungsform der erfindungsgemäßen Vorrichtung wird bei der Regelung wenigstens einer Verarbeitungsregelungsgröße wenigstens eine Verarbeitungsüberwachungsgröße derart überwacht, dass die Prozessoreinrichtung anhand wenigstens einer Kennfunktion der Verarbeitungsregelungsgröße deren Abhängigkeit von wenigstens einer Verarbeitungssteuerungsgröße und von der Verarbeitungsüberwachungsgröße betrachtet und wenigstens ein Optimalwert unter den Mess- oder Erfahrungswerten wenigstens einer Verarbeitungssteuerungsgröße ermittelt wird, für welchen einerseits der jeweilige Kennfunktionswert gemäß dem jeweiligen Regelungskriterium minimal, maximal oder den geringsten Differenzbetrag zum vorgegebenen Sollwert aufweist und andererseits wenigstens ein zu dem wenigstens einen Optimalwert gehöriger Mess- oder Erfahrungswert der Verarbeitungsüberwachungsgröße den - bevorzugt produktbezogenen - unteren und/oder oberen Erfahrungsgrenzwert und/oder Benutzergrenzwert nicht unter- bzw. überschreitet.

In einer bevorzugten Weiterbildung der erfindungsgemäßen Vorrichtung erfolgt die Regelung wenigstens einer Verarbeitungsregelungsgröße automatisch, indem die Steuerungseinrichtung wenigstens einen Sollwert wenigstens einer Verarbeitungssteuerungsgröße auf wenigstens einen aus der wenigstens einen entsprechenden Kennfunktion ermittelten Optimalwert der wenigstens Verarbeitungssteuerungsgröße setzt.

In einer anderen bevorzugten Ausführungsform der erfindungsgemäßen Vorrichtung erfolgt die Regelung einer Verarbeitungsregelungsgröße manuell, indem der wenigstens eine, aus der wenigstens einen entsprechenden Kennfunktion ermittelte Optimalwert der wenigstens einen Verarbeitungssteuerungsgröße auf der Ausgabeeinrichtung ausgegeben wird, damit der Benutzer den wenigstens einen Sollwert der wenigstens einen entsprechenden Verarbeitungssteuerungsgröße über die Eingabeeinrichtung selbst entsprechend verändern kann. Dieser halbautomatische Betriebsmodus hat den Vorteil, dass - insbesondere bei Aufnahme der Produktion neuer Produktformen - der Bediener vorerst eine Eingriffsmöglichkeit in die Steuerung der Spritzgussmaschine behält oder lediglich Hilfestellungen bei der Optimierung der Verarbeitungsregelungsgröße erwünscht sind.

In einer weiteren bevorzugten Ausführungsform der erfindungsgemäßen Vorrichtung kann die Vorrichtung in wenigstens einem - bevorzugt produktbezogenen - Modus maximaler Ausstoßrate betrieben werden, in welchem die Produktzyklusdauer als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

In einer bevorzugten Weiterbildung der erfindungsgemäßen Vorrichtung kann die Vorrichtung in wenigstens einem - bevorzugt produktbezogenen - Modus minimaler Produktkosten betrieben werden kann, in welchem die Produktkosten als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

In einer anderen bevorzugten Ausführungsform der erfindungsgemäßen Vorrichtung kann die Vorrichtung in wenigstens einem - bevorzugt produktbezogenen - Modus minimalen Energieeinsatzes pro Produktzyklus betrieben werden, in welchem der Energieeinsatz pro Produktzyklus als Verarbeitungsregelungsgröße auf dessen Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

In einer weiteren bevorzugten Ausführungsform der erfindungsgemäßen Vorrichtung werden wenigstens zwei Verarbeitungsüberwachungsgrößen als Verarbeitungsregelungsgrößen gemäß wenigstens einer vorbestimmen Kombinationen aus den genannten oder dergleichen Regelungskriterien geregelt. Bevorzugt erfolgt dies dadurch, dass die Prozessoreinrichtung - bevorzugt aus der wenigstens einen Kennfunktion oder in dem wenigstens einen Lernmodus - wenigstens einen Optimalwert wenigstens einer Verarbeitungssteuerungsgröße für den optimalen Produktzyklus ermittelt, für den zugleich Produktzyklusdauer, Material- und Energieeinsatz pro Produktzyklus minimal sind.

In einer bevorzugten Weiterbildung der erfindungsgemäßen Vorrichtung ist die Steuerungseinrichtung mit wenigstens einem Datennetz, insbesondere einem Intranet oder dem Internet verbindbar und wird durch die Steuerungseinrichtung wenigstens ein Daten-Dienst im Datennetz zur Verfügung gestellt, welcher einer Gruppe entnommen ist, die Web- und/oder XML-Server-Dienste, FTP-Server-Dienste, SQL-Server-Dienste, E-Mail-Dienste, Applikationsserver-Dienste, insbesondere J2EE-Dienste, File-Server-Dienste, insbesondere WebDAV-, SMB-, NFS- oder AFP-Server-Dienste und dergleichen enthält und/oder dass die Steuerungseinrichtung als Endgerät (Client) für den wenigstens einen Daten-Dienst fungiert.
In einer bevorzugten Ausführungsform der erfindungsgemäßen Vorrichtung stellt die Steuerungseinrichtung mittels wenigstens eines der Datendienste in dem wenigstens einen Datennetz wenigstens eine Verarbeitungssteuerungs-, mess-, überwachungs- und/oder -regelungsgröße, wie insbesondere die Produktzyklusdauer, die Produktkosten, die Produktqualität, den Rohmaterial- und/oder Energieeinsatz pro Produktzyklus, den zu erwartenden Rohmaterialbedarf, die zu erwartende Produktionsdauer und/oder die zu erwartenden Gestehungskosten für eine vorgegebene Menge eines vorbestimmten Produktes, die Produktfehlerwahrscheinlichkeit, die Produktfehlerhäufigkeit, die Anzahl von Produktzyklen bis zu einer Wartung, Kalibrierung und/oder einem Austausch von Teilen der Vorrichtung, insbesondere der Formgebungseinrichtung, die Wartungs- und Instandsetzungskosten und/oder die Produktionsanfahrzeit und/oderkosten im Wesentlichen in Echtzeit zur Verfügung. Das offenbarte Verfahren, insbesondere ein Extrusions- oder Spritzgussverfahren, zur benutzerspezifischen Überwachung der Verarbeitung von Kunststoffen in einer vorbestimmten Abfolge einzelner, über vorbestimmte Prozessparameter steuerbarer Verarbeitungsprozesse, umfasst wenigstens die folgenden Schritte:
In wenigstens einem Materialzuführungsschritt als wenigstens einem Verarbeitungsprozess wird der zu verarbeitenden Kunststoff als Rohmaterial zugeführt. Weiter ist wenigstens ein Plastifizierschritt als wenigstens ein weiterer Verarbeitungsprozess vorgesehen, in dem das zugeführte Rohmaterial plastifiziert und/oder homogenisiert wird. In wenigstens einem Formgebungsschritt als wenigstens einem weiteren Verarbeitungsprozess wird das plastifizierte und/oder homogenisierte Rohmaterial zu einem Produkt geformt, welches nach einer vorbestimmten Abkühl- und/oder Aushärtezeit entnehmbar ist. Dabei definiert die Abfolge der Verarbeitungsprozesse zwischen Zuführung des Rohmaterials und der Entnahme des Produkts - nach einem Produktionsanfahrschritt - einen Produktzyklus.

In wenigstens einem weiteren Steuerungsschritt wird die Verarbeitung über wenigstens eine Verarbeitungssteuergröße - insbesondere über wenigstens einen der Prozessparameter - gesteuert. Gemäß der Offenbarung ist wenigstens ein Eingabeschritt vorgesehen, durch den wenigstens ein Wert einer Verarbeitungseingabegröße, wie insbesondere die Kosten der Vorrichtung, des Rohmaterials, der Energie, der Formgebungseinrichtungen, der Abschreibung, der Zinsen und/oder des Personals, Verarbeitungsmenge eingegeben und bevorzugt wenigstens ein Sollwert wenigstens einer Verarbeitungssteuerungsgröße vorgegeben werden kann.
In wenigstens einem Prozessierungsschritt ist aus wenigstens einer vorbestimmten Verarbeitungssteuerungsgröße und/oder wenigstens einer vorbestimmten Verarbeitungseingabegröße wenigstens eine vorbestimmte Verarbeitungsüberwachungsgröße im Wesentlichen in Echtzeit ermittelbar, wie insbesondere die Produktzyklusdauer, die Produktkosten, die Produktqualität, den Rohmaterial- und/oder Energieeinsatz pro Produktzyklus, den zu erwartenden Rohmaterialbedarf, die zu erwartende Produktionsdauer und/oder die zu erwartenden Gestehungskosten für eine vorgegebene Menge eines vorbestimmten Produktes, die Produktfehlerwahrscheinlichkeit, die Produktfehlerhäufigkeit, die Anzahl von Produktzyklen bis zu einer Wartung, Kalibrierung und/oder einem Austausch von Teilen der Vorrichtung, insbesondere der Formgebungseinrichtung, die Wartungs- und Instandsetzungskosten und/oder die Produktionsanfahrzeit und/oder -kosten.
Ferner kann in wenigstens einem Ausgabeschritt wenigstens ein Wert wenigstens einer Verarbeitungsüberwachungsgröße, insbesondere der Ist-, Soll-, Durchschnittswert, der seit dem Beginn des Verfahrens integrierte Wert und/oder dessen Historie, und/oder die Tendenz ausgegeben, und bevorzugt über Kennfeld dargestellt werden.

Gemäß einer bevorzugten Weiterbildung umfasst das erfindungsgemäße Verfahren ferner wenigstens einen Schritt zur benutzerspezifischen Regelung der Verarbeitung von Kunststoffen. In diesem Schritt wird wenigstens eine Verarbeitungsüberwachungsgröße als Verarbeitungsregelungsgröße gemäß wenigstens einem - bevorzugt in dem Eingabeschritt - vorgebbaren Regelungskriterium oder auf wenigstens einen vorgebbaren Sollwert regelt.

Bevorzugte Ausführungsformen der erfindungsgemäßen Vorrichtung haben den Vorteil, dass im Produktionsprozess und bei der Wartung nicht nur durchschnittliche Erfahrungswerte zur Steuerung herangezogen werden. Im Gegensatz zu Vorrichtungen gemäß dem Stand der Technik erfolgt nicht eine simple Steuerung der Produktionsqualität und der Produktionsmenge über die entsprechenden Verarbeitungssteuerungsgrößen, sondern eine aktive Regelung meist komplexerer Verarbeitungsregelungsgrößen wie des Energieeinsatzes für eine vorbestimmten Menge eines Produkts.

Damit ist bereits die Bedienerfreundlichkeit der erfindungsgemäßen Vorrichtung gegenüber Vorrichtungen aus dem Stand der Technik erhöht. D.h. der Bediener der Vorrichtung muss nicht umständlich gemittelte Erfahrungswerte für die Verarbeitungssteuerungsgrößen, d.h. vor allem die Prozessparameter der einzelnen Verarbeitungsprozesse finden, für welche die Verarbeitung und/oder die Produkte bestimmten Zielkriterien entsprechen. Vielmehr können derlei Regelungskriterien, wie z. B. minimaler Energieeinsatz für eine vorgegebene Menge eines vorbestimmten Produktes, auf einfache Weise direkt über die Eingabeeinrichtung definiert und/oder ggf. beziffert werden. Damit ermöglichen bevorzugte Ausführungsformen der erfindungsgemäßen Vorrichtung einen automatisiert kosten- und/oder energieeffizienteren Betrieb.

Vorteilhaft sind bevorzugte Ausführungsformen der erfindungsgemäßen Vorrichtung auch insofern, als der Energieeinsatz nicht nur passiv und ungefähr über Verarbeitungssteuerungsgrößen, d.h. i.d.R. über die Prozessparameter gesteuert wird. Vielmehr kann durch Messung bestimmter Istwerte der in den Energieeinsatz einfließenden Verarbeitungsmessgrößen, wie Anschlussleistung der Vorrichtung, Umgebungstemperatur, Temperatur des Rohmaterials, des Spritzgusswerkzeugs, des Kühlwassers und des entformten Produkts über geeignete Berechungsalgorithmen in der Prozessoreinrichtung der genaue Istwert des Energieeinsatzes berechnet, die Abweichung von dessen Sollwert bestimmt und die sich daraus ergebende Fehlergröße auf einfache Weise durch die Regelungseinrichtung minimiert werden.

Dies erfolgt bevorzugt auf der Basis der in den Messreihen bestimmten Abhängigkeiten der Verarbeitungsregelungsgrößen von der Verarbeitungssteuerungsgrößen in Form der in der Speichereinrichtung gespeicherten Kennfunktionen. D.h. die Vorrichtung kann aus den Kennfunktionen durch die Prozessoreinrichtung ermitteln, welche Verarbeitungssteuerungsgrößen, insbesondere welcher Prozessparameter, wie zu verändern sind, damit die Fehlergröße der Regelung nach Möglichkeit verschwindet.

Eine solche aktive Regelung hat ferner der Vorteil, dass hierdurch automatisch berücksichtigt werden kann, dass für verschiedene Produktformen, d.h. für durch unterschiedliche Spritzgusswerkzeuge geformte Produkte, i.d.R. andere, für einen minimalen Energieeinsatz optimale Verarbeitungssteuerungsgrößen eingestellt werden müssen.

Ferner erlauben bevorzugte Ausführungsformen der Vorrichtung gemäß der vorliegenden Erfindung, dass Zusammenhänge zwischen Verarbeitungsüberwachungs- und/oder -regelungsgrößen, wie Produktzyklusdauer und Energieeinsatz pro Produktzyklusdauer in vorteilhafter Weise auch im Regelkreis berücksichtigt werden können. Durch die Berücksichtigung solcher Zusammenhänge können für verschiedene Produktformen eine Vielzahl von Verarbeitungseingabe- und Verarbeitungssteuerungsgrößen in die Regelung und Optimierung des Verarbeitungsprozesses einbezogen werden. D.h. die Vorrichtung ermöglicht auf vorteilhafte Weise diejenigen Verarbeitungssteuerungsgrößen für eine Produktform zu ermitteln, für welche die Verarbeitungsregelungsgröße, wie z. B. den Energieeinsatz pro Produktzyklus, gemäß dem vorgegebenen Regelungskriterium optimal sind, für die jedoch zudem der Istwert einer vorbestimmten Verarbeitungsüberwachungsgröße, wie z. B. die Produktqualität, über einem vorgegebenen unteren Benutzergrenzwert liegt.

Es sei angemerkt, dass nicht alle Vorteile durch sämtliche Ausführungsformen der erfindungsgemäßen Vorrichtung verwirklicht werden müssen.

Weitere Vorteile und Ausführungsformen der vorliegenden Erfindung ergeben sich aus der folgenden Beschreibung bevorzugter Ausführungsbeispiele und der beiliegenden Zeichnung.

Darin zeigt die Figur eine schematische Darstellung einer erfindungsgemäßen Vorrichtung zum Verarbeiten von Kunststoffen.

Im Folgenden wird eine erfindungsgemäße Vorrichtung zur Vereinfachung am Beispiel einer Spritzgussmaschine beschrieben. Dies ist jedoch nicht so auszulegen, dass der Erfindungsgegenstand hierauf beschränkt ist. Vielmehr sind die beschriebenen Merkmale und Funktionen in analoger Weise auch auf Extrusionsmaschinen oder andere kunststoffverarbeitende Maschinen übertragbar.

Die Figur zeigt - wie bereits angedeutet - eine Spritzgussmaschine als Ausführungsform der erfindungsgemäßen Vorrichtung, welche eine Materialzuführungseinrichtung 1 aufweist, durch die einer Plastifiziereinrichtung 2 das zu verarbeitende Rohmaterial zugeführt wird. Ferner weist die erfindungsgemäße Spritzgussmaschine eine Formgebungseinrichtung 3 in Form eines Spritzgusswerkzeugs auf. In das Spritzgusswerkzeug wird das durch die Plastifiziereinrichtung 2 plastifizierte und/oder homogenisierte Rohmaterial bei geschlossenem Spritzgusswerkzeug unter Druck eingespritzt und nach einer vorgegebenen Abkühl- bzw. Aushärtezeit durch Öffnen des Spritzgusswerkzeuges als geformtes Produkt entformt.

Weiterhin weist die Spritzgussmaschine eine Steuerungseinrichtung 5 auf, welche die Verarbeitung des zu verarbeitenden Rohmaterials über die Verarbeitungssteuergrößen - insbesondere über die Prozessparameter wie die Rohmaterialmenge, den Einspritzdruck des plastifizierten und/oder homogenisierten Rohmaterials, die Schließkraft des Spritzgusswerkzeuges und dergleichen - steuert. Dazu ist die Steuerungseinrichtung 5 über Steuerungsleitungen 60 mit der Plastifiziereinrichtung 2, der Materialzuführungseinrichtung 1 und der Formgebungseinrichtung 3 verbunden. Die Steuerungsleitungen 60 übermitteln die Steuerungsbefehle der Steuerungseinrichtung 5 an die gesteuerten Teile der genannten Einrichtungen, wie insbesondere an die Einrichtung zum Öffnen und Schließen des Spritzgusswerkzeuges.

Mit der Steuerungseinrichtung 5 ist ferner die Eingabeeinrichtung 130 datenverbindbar. Als Eingabeeinrichtung 130 sei hier eine standardisierte PC-Tastatur angenommen. In Betracht kommen jedoch auch Lösungen, bei denen die Eingabeeinrichtung 130 und eine Ausgabeeinrichtung 16 als Bildschirm mit Touchfunktion kombiniert sind.

Über die Eingabeeinrichtung 130 können die für die Überwachung und Regelung der Spritzgussmaschine relevanten Werte der Verarbeitungseingabegrößen eingegeben werden. Als solche kommen insbesondere die Kosten des Rohmaterials, der Energie, der Spritzgusswerkzeuge und die Verarbeitungsmenge oder auch Produktmenge, d.h. die Anzahl der in einem Produktionsgang geformten Produkte, in Betracht. Über die Eingabeeinrichtung 130 werden zudem die Sollwerte der Verarbeitungssteuerungsgrößen, wie z. B. die Einspritzgeschwindigkeit oder der Einspritzdruck vorgegeben.

Ferner ist eine Prozessoreinrichtung 14 mit der Steuerungseinrichtung 5 datenverbindbar. Mit Hilfe der Prozessoreinrichtung 14 sind aus vorbestimmten Verarbeitungssteuerungsgrößen, wie in diesem Beispiel dem Einspritzdruck und vorbestimmten Verarbeitungseingabegrößen, wie den Energie-, Rohmaterial-, Personal- und den Investitionskosten für die Spritzgussmaschine eine Verarbeitungsüberwachungsgröße, nämlich in diesem Ausführungsbeispiel unter anderem die Kosten jedes einzelnen Produkts sowie die Gestehungskosten einer vorgegebenen Produktmenge - laufend, d.h. auch bei veränderten Verarbeitungssteuerungs- und/oder Verarbeitungseingabegrößen - ermittelbar.

Gemäß dem Ausführungsbeispiel in der Figur ist die Steuerungseinrichtung 5 mit der Ausgabeeinrichtung 16 datenverbindbar. Über die Ausgabeeinrichtung 16 werden die Werte der Verarbeitungsüberwachungsgrößen, insbesondere der Ist-, Soll-, Durchschnittswert, der seit dem Anfahren der Vorrichtung integrierte Wert, dessen Historie und die Tendenz ausgegeben. Außerdem ist die Möglichkeit vorgesehen, einen dieser Werte über Kennfeld darzustellen.

Die Steuerungseinrichtung 5 der Spritzgussmaschine gemäß der Figur ist zudem mit einem Datennetz 100 verbunden, welches einerseits mit einem Datendienstendgerät 120 verbunden ist. Andererseits kann die Steuerungseinrichtung 5 über das Datennetz 100 mit Steuerungseinrichtungen weiterer Kunststoffverarbeitungsmaschinen oder aber über eine entsprechende Schnittstelle mit einem entfernten Netzwerk (Wide Area Network - WAN) oder aber dem Internet verbunden sein.

Die Spritzgussmaschine in der Figur als Ausführungsform der erfindungsgemäßen Vorrichtung ist ferner zur benutzerspezifischen Regelung der Verarbeitung eingerichtet. D.h., dass eine Verarbeitungsüberwachungsgröße, in diesem Beispiel die Gestehungskosten für eine vorgegebene Produktmenge, als Verarbeitungsregelungsgröße geregelt wird. Dazu ist die Steuerungseinrichtung 5 ferner mit der Regelungseinrichtung 15 datenverbindbar. Die Regelungseinrichtung 15 ist damit über die Steuerungseinrichtung 5 auch mit der Eingabeeinrichtung 130 datenverbindbar, über welche das Regelungskriterium, im Ausführungsbeispiel nach der Figur die minimalen Gestehungskosten, vorgegeben werden kann.

Vermittelt durch die Steuerungseinrichtung 5 stehen der Regelungseinrichtung 15 die in der Prozessoreinrichtung 14 ermittelten Istwerte der Gestehungskosten für die vorgegebene Produktmenge zur Verfügung. Dazu sind in der Prozessoreinrichtung 14 geeignete Berechnungsalgorithmen gespeichert und bei veränderter Konfiguration der Spritzgussmaschine aktualisierbar, welche die Verarbeitungseingabegrößen, im Ausführungsbeispiel insbesondere Energie-, Rohmaterial-, Personal- und den Investitionskosten für die Spritzgussmaschine, mit den über geeignete Messeinrichtungen 13 ermittelten Verarbeitungsmessgrößen, wie der Anschlussleistung der Spritzgussmaschine, der Temperatur des Spritzgusswerkzeug oder aus Verarbeitungsmessgrößen, wie dem Rohmaterialvorrat abgeleiteten Verarbeitungsüberwachungsgrößen, z. B. dem Rohmaterialeinsatz für die vorgegebene Produktmenge, verknüpft.

Dazu weist die Spritzgussmaschine gemäß dem Ausführungsbeispiel in der Figur eine erste Messeinrichtung 13 auf, welche an der Materialzuführungseinrichtung 1 angeordnet ist und welche als Verarbeitungsmessgröße den Rohmaterialvorrat misst. Über die Datenverbindungsleitung 11 wird der Istwert des Rohmaterialvorrats an die Steuerungseinrichtung 5 und über diese an die Prozessoreinrichtung 14 übermittelt. Aus der Verarbeitungsmessgröße Rohmaterialvorrat können dann in der Prozessoreinrichtung 14 insbesondere leicht daraus ableitbare Verarbeitungsüberwachungsgrößen wie der Rohmaterialeinsatz für die vorgegebene Produktmenge, der Rohmaterialeinsatz pro Produktzyklus und/oder ganz allgemein die Änderung des Rohmaterialvorrats, insbesondere in Abhängigkeit der Zeit bestimmt werden.

Zudem weist die in der Figur gezeigte Spritzgussmaschine an der Plastifiziereinrichtung 2 und an deren Düse sowie an der Formgebungseinrichtung 3 in Form des Spritzgusswerkzeug selbst zweite Messeinrichtungen 13 auf, welche Verarbeitungsmessgrößen messen, die das plastifizierte und/oder homogenisierte Rohmaterial und das nach dem Einspritzen im Spritzgusswerkzeug befindliche Material betreffen. Bevorzugt handelt es sich insbesondere um Zustandsmessgrößen des plastifizierten und/oder homogenisierten Rohmaterials sowie des eingespritzten Materials, wie beispielsweise dessen Temperatur, Viskosität, Homogenität, Druck oder dergleichen. Die Istwerte der genannten Verarbeitungsmessgrößen werden über die Datenverbindungsleitungen 21 an die Steuerungseinrichtung 5 und über diese an die Prozessoreinrichtung 14 übermittelt.

Im darstellten Ausführungsbeispiel weist die Spritzgussmaschine ferner dritte Messeinrichtungen 13 in der Spritzgussmaschine selbst auf, mittels derer Verarbeitungsmessgrößen wie die momentane Leistungsaufnahme, die zur Verfügung gestellte Kühlleistung und dergleichen Betriebszustandsgrößen der Spritzgussmaschine gemessen werden. Über die Datenverbindungsleitung 31 werden die Istwerte der genannten Verarbeitungsmessgrößen an die Steuerungseinrichtung 5 und über diese an die Prozessoreinrichtung 14 übermittelt.

Neben den auf diese Weise ermittelten Istwerten der Gestehungskosten für die vorgegebene Produktmenge steht der Regelungseinrichtung 15 - über die Eingabeeinrichtung 130 vermittelt durch die Steuerungseinrichtung 5 - auch der Sollwert für die Gestehungskosten zur Verfügung und zwar in Form des Regelungskriteriums, nämlich bevorzugt die Regelung auf das Minimum des Gestehungskosten, oder in Form eines oberen Benutzergrenzwerts für die Gestehungskosten, der nicht überschritten werden darf.

Aus dem Istwert der Gestehungskosten kann über deren Historie und Tendenzwert deren Endwert prognostiziert werden. Die Abweichung des prognostizierten Endwerts vom Soll- oder sich bei optimalen Verarbeitungssteuerungsgrößen ergebenden Minimalwerts stellt die Fehlergröße dar, welche durch die Regelungseinrichtung 15 minimiert werden kann. Dies erfolgt bevorzugt auf der Basis der in Messreihen bestimmten Abhängigkeiten der Gestehungskosten als Verarbeitungsregelungsgröße von den Verarbeitungssteuerungsgrößen in Form der in der Speichereinrichtung 17 gespeicherten Kennfunktionen. Dabei ermittelt die Prozessoreinrichtung 14 aus den Kennfunktionen, welche Verarbeitungssteuerungsgröße, insbesondere welcher Prozessparameter, wie zu verändern sind, damit die Fehlergröße der Regelung nach Möglichkeit verschwindet.

Anfänglich ist eine solche Kennfunktion bevorzugt in Form von Erfahrungswerten in der Speichereinrichtung 17 gespeichert. Um jedoch zu berücksichtigen, dass sich die Verarbeitungssteuerungsgrößen, für welche das Verarbeitungsregelungsgröße ihren Optimalwert annimmt für unterschiedliche Produktformen unterschiedlich sind und sich auch im laufenden Produktionsprozess durch veränderte Verarbeitungseingabegrößen, Umkonfigurationen der Spritzgussmaschine, Abnutzung des Spritzgusswerkzeugs usw. verändern, wird die Spritzgussmaschine, bevorzugt in automatisch den eine Aktualisierung der Kennfunktionen erfordernden Ereignissen angepassten Abständen in einem Lernmodus betrieben.

In dem Lernmodus wird bei automatischer Änderung des Sollwertes einer vorbestimmter Verarbeitungssteuerungsgröße in vorbestimmten Schritten, also beispielsweise der Zieltemperatur für die Abkühlung des Produkts, um dieses, ohne dass sich dabei weitere plastische Verformungen ergeben, entformen zu können, und bei im Wesentlichen festen Werten der anderen Verarbeitungssteuerungsgrößen nach einem Produktzyklus mittels einer Messeinrichtung 13 (nicht dargestellt) die für die rechtzeitige Abkühlung vor dem Start eines neuen Produktzyklus nötige Kühlleistung gemessen.

Mit Hilfe dieser Verarbeitungsmessgröße ermittelt die Prozessoreinrichtung 14 über den Istwert der Verarbeitungseingabegröße Kühlenergiekosten den für den Istwert der Kühlleistung prognostizierten Endwert der Gestehungskosten für eine vorgegebene Menge eines vorbestimmten Produktes.

Grundsätzlich erfordert bereits die gewünschte Produktzyklusdauer, anders ausgedrückt die gewünschte Produktausstoßrate, welche zumeist als Verarbeitungsüberwachungsgröße einen unteren Grenzwert übersteigen soll, eine minimale Kühlleistung. Diese kann zugleich auch der Optimalwert hinsichtlich der geringsten Gestehungskosten sein.

Höhere Kühlleistungen können jedoch zur Folge haben, dass sich andere Verarbeitungsüberwachungsgrößen wie z. B. eine geringere Werkzeugabnutzung senkend auf die Gestehungskosten auswirken. Insofern erlaubt der Lernmodus in der genannten Messreihe die produktbezogene Kennfunktion der Gestehungskosten in Abhängigkeit der Kühlleistung und insbesondere eine - möglicherweise hinsichtlich minimaler Gestehungskosten höhere - optimale Kühlleistung zu ermitteln, als deren durch die Produktzyklusdauer gesetztes Minimum. Die Kennfunktion wird in der Speichereinrichtung 17 in Form einer vorbestimmten Anzahl diskreter Messwerttupel, in diesem Beispiel also (Kühlleistung, Gestehungskosten) gespeichert.

## Patentansprüche

1. Vorrichtung, insbesondere Extrusions- oder Spritzgussmaschine, zur benutzerspezifischen Überwachung der Verarbeitung von Kunststoffen in einer vorbestimmten Abfolge einzelner, über vorbestimmte Prozessparameter steuerbarer Verarbeitungsprozesse mit:
- wenigstens einer Materialzuführungseinrichtung (1), welche in wenigstens einem Verarbeitungsprozess den zu verarbeitenden Kunststoff als Rohmaterial zuführt;
- wenigstens einer Plastifiziereinrichtung (2), welche in wenigstens einem weiteren Verarbeitungsprozess das zugeführte Rohmaterial plastifiziert und/oder homogenisiert;
- wenigstens einer Formgebungseinrichtung (3), insbesondere einem Spritzgusswerkzeug, welche das plastifizierte und/oder homogenisierte Rohmaterial in wenigstens einem weiteren Verarbeitungsprozess zu einem Produkt formt, welches der Formgebungseinrichtung (3) nach einer vorbestimmten Abkühl- und/oder Aushärtezeit entnommen wird, wobei - nach einer vorbestimmten Produktionsanfahrzeit der Vorrichtung - die Abfolge der Verarbeitungsprozesse zwischen Zuführung des Rohmaterials und der Entnahme des Produkts einen Produktzyklus definieren,
- wenigstens einer, die Verarbeitung über wenigstens eine Verarbeitungssteuergröße, nämlich über wenigstens einen der Prozessparameter, steuernden Steuerungseinrichtung (5), welche mit wenigstens einer Eingabeeinrichtung (130) datenverbunden ist, über die wenigstens ein Wert einer Verarbeitungseingabegröße, wie insbesondere die Kosten der Vorrichtung, des Rohmaterials, der Energie, der Formgebungseinrichtungen, der Abschreibung, der Zinsen und/oder des Personals, Verarbeitungsmenge eingegeben und wenigstens ein Sollwert wenigstens einer Verarbeitungssteuerungsgröße vorgegeben werden kann,
- wenigstens einer mit der Steuerungseinrichtung (5) datenverbundenen Prozessoreinrichtung (14), mit welcher aus wenigstens einer vorbestimmten Verarbeitungssteuerungsgröße und wenigstens einer vorbestimmten Verarbeitungseingabegröße wenigstens eine vorbestimmte Verarbeitungsüberwachungsgröße, wie insbesondere Produktzyklusdauer, Produktkosten, Produktqualität, Rohmaterial- und/oder Energieeinsatz pro Produktzyklus, zu erwartender Rohmaterialbedarf, zu erwartende Produktionsdauer und/oder zu erwartenden Gestehungskosten für eine vorgegebene Menge eines vorbestimmten Produktes, Produktfehlerwahrscheinlichkeit, Produktfehlerhäufigkeit, die Anzahl von Produktzyklen bis zu einer Wartung, Kalibrierung und/oder einem Austausch von Teilen der Vorrichtung, insbesondere der Formgebungseinrichtung, Wartungs- und Instandsetzungskosten, Produktionsanfahrzeit und/oder -kosten, im Wesentlichen in Echtzeit ermittelbar ist,
- wobei die Steuerungseinrichtung (5) mit wenigstens einer Ausgabeeinrichtung (16) datenverbunden ist, über welche wenigstens ein Wert wenigstens einer Verarbeitungsüberwachungsgröße, insbesondere der Ist-, Soll-, Durchschnittswert, der seit dem Anfahren der Vorrichtung integrierte Wert und/oder dessen Historie, und/oder die Tendenz ausgegeben, und bevorzugt über Kennfeld dargestellt werden kann,
- und **dadurch gekennzeichnet, dass** die Prozessoreinrichtung (14) mit wenigstens einer Speichereinrichtung (17) datenverbunden ist, in welcher für wenigstens eine Verarbeitungsüberwachungsgröße wenigstens ein unterer und/oder ein oberer produktbezogener Erfahrungsgrenzwert gespeichert ist.

2. Vorrichtung gemäß Anspruch 1 ferner zur benutzerspezifischen Regelung der Verarbeitung von Kunststoffen,
**dadurch gekennzeichnet, dass**
wenigstens eine Verarbeitungsüberwachungsgröße als Verarbeitungsregelungsgröße geregelt wird, indem die Steuerungseinrichtung (5) ferner mit wenigstens einer Regelungseinrichtung (15) datenverbindbar ist, welche wenigstens eine Verarbeitungsregelungsgröße gemäß wenigstens einem - bevorzugt über die Eingabeeinrichtung (130) - vorgebbaren Regelungskriterium oder auf wenigstens einen vorgebbaren Sollwert regelt.

3. Vorrichtung nach wenigstens einem der vorangegangenen Ansprüche,
**dadurch gekennzeichnet, dass**
das wenigstens eine Regelungskriterium einer Gruppe entnommen ist, welche wenigstens minimale Produktzyklusdauer, d.h. größte Produktausstoßrate, minimalen Energieeinsatz pro Produktzyklus, minimale Produktkosten, minimale Gestehungskosten für eine vorgegebene Menge eines vorbestimmten Produktes, maximale Produktqualität, maximale Anzahl von Produktzyklen bis zu einer Wartung, Kalibrierung und/oder einem Austausch von Teilen der Vorrichtung, minimale Wartungs- und Instandsetzungskosten und/oder minimale Produktionsanfahrzeit und/oder -kosten enthält.

4. Vorrichtung nach wenigstens einem der vorangegangenen Ansprüche,
**dadurch gekennzeichnet, dass**
die Prozessoreinrichtung (14) mit wenigstens einer Speichereinrichtung (17) datenverbindbar ist, in welcher für wenigstens eine Verarbeitungsregelungsgröße wenigstens ein unterer und/oder ein oberer - bevorzugt produktbezogener - Erfahrungsgrenzwert gespeichert ist.

5. Vorrichtung nach wenigstens einem der vorangegangenen Ansprüche,
**dadurch gekennzeichnet, dass**
die Prozessoreinrichtung (14) bei der Regelung wenigstens einer Verarbeitungsregelungsgröße, wenigstens eine Verarbeitungsüberwachungsgröße derart überwacht, dass deren Istwerte den wenigstens einen unteren und/oder oberen Erfahrungsgrenzwert und/oder wenigstens einen - bevorzugt über die Eingabeeinrichtung (130) - vorgegebbaren unteren und/oder oberen - bevorzugt produktbezogenen - Benutzergrenzwert nicht unter- bzw. überschreiten.

6. Vorrichtung nach wenigstens einem der vorangegangenen Ansprüche,
**dadurch gekennzeichnet, dass**
die Steuerungseinrichtung (5) bei der Über- oder Unterschreitung wenigstens eines Erfahrungs- und/oder Benutzergrenzwerts durch den Istwert der wenigstens einen Verarbeitungsüberwachungsgröße - insbesondere bei einer im Wesentlichen dauerhaften Über- oder Unterschreitung über eine vorgebbare Anzahl von Produktzyklen hinweg, ein entsprechendes Warnsignal und/oder eine Warnmeldung über die Ausgabeeinrichtung (16) ausgibt und/oder die Vorrichtung in einen Sicherheitszustand steuert oder abschaltet.

7. Vorrichtung nach wenigstens einem der vorangegangenen Ansprüche,
**dadurch gekennzeichnet, dass**
die Steuerungseinrichtung (5) mit wenigstens einer Messeinrichtung (13) datenverbindbar ist, welche - gesteuert durch die Steuerungseinrichtung (5) - laufend oder zu vorbestimmten Zeitpunkten während wenigstens eines vorbestimmten Verarbeitungsprozesses innerhalb wenigstens eines vorbestimmten Produktzyklusses wenigstens eine vorbestimmte Verarbeitungsmessgröße misst, die einer Gruppe entnommen ist, welche wenigstens Fehler, Stillstandszeiten, insbesondere Rüst- und Wartungszeiten, und/oder Leistungsaufnahme der Vorrichtung, Temperatur, Abnutzung, Standzeiten und/oder Fehler der Formgebungseinrichtung, Temperatur und/oder Verbrauch des zur Abkühlung des Produkts eingesetzten Kühlmittels, Dauer wenigstens eines der Verarbeitungsprozesse, Umgebungstemperatur, Viskosität des für wenigstens eine hydraulische Einrichtung der Vorrichtung benutzen Öls und dergleichen enthält.

8. Vorrichtung nach wenigstens einem der vorangegangenen Ansprüche,
**dadurch gekennzeichnet, dass**
die Prozessoreinrichtung (14) mit Hilfe der wenigstens einen Verarbeitungsmessgröße wenigstens einen Istwert wenigstens einer vorbestimmten Verarbeitungssteuerungs-, -überwachungs- und/oder -regelungsgröße, insbesondere die Produktzyklusdauer und/oder den Energieeinsatz pro Produktzyklus, ermitteln kann, sowie bevorzugt die Abweichung des jeweiligen Istwerts vom entsprechenden Sollwert.

9. Vorrichtung nach wenigstens einem der vorangegangenen Ansprüche,
**dadurch gekennzeichnet, dass**
wenigstens eine Abhängigkeit wenigstens einer Verarbeitungsüberwachungs- oder -regelungsgröße von wenigstens einer Verarbeitungssteuerungsgröße und/oder wenigstens einer anderen Verarbeitungsüberwachungs- und/oder -regelungsgröße als wenigstens eine Kennfunktion in Form einer vorbestimmten Anzahl diskreter - bevorzugt produktbezogener -Erfahrungswerttupel in der Speichereinrichtung (17) gespeichert ist.

10. Vorrichtung nach wenigstens einem der vorangegangenen Ansprüche,
**dadurch gekennzeichnet, dass**
die Vorrichtung in wenigstens einem - bevorzugt produktbezogenen - Lernmodus betrieben werden kann, in welchem in wenigstens einer Messreihe bei automatischer Änderung des Sollwertes wenigstens einer vorbestimmten Verarbeitungssteuerungsgröße nach wenigstens einem Produktzyklus in vorbestimmten Schritten und ggf. vorbestimmten festen Werten wenigstens einer anderen Verarbeitungssteuerungsgröße mittels der wenigstens einen Messeinrichtung (13) wenigstens eine vorbestimmte Verarbeitungsmessgröße gemessen wird, mit deren Hilfe die Prozessoreinrichtung (14) den sich dabei einstellenden wenigstens einen Istwert wenigstens einer vorbestimmten Verarbeitungsregelungs- und/oder -überwachungsgröße und dadurch wenigstens eine Kennfunktion ermittelt, die in der Speichereinrichtung (17) in Form einer vorbestimmten Anzahl diskreter - bevorzugt produktbezogener - Messwerttupel gespeichert wird.

11. Vorrichtung nach wenigstens einem der vorangegangenen Ansprüche,
**dadurch gekennzeichnet, dass**
die Prozessoreinrichtung (14) auf Basis der wenigstens einen Messreihe für die wenigstens eine Verarbeitungseingabegröße wenigstens einen - bevorzugt über die Ausgabeeinrichtung (16) ausgebbaren - Grenzwert ermittelt, für den wenigstens eine Verarbeitungsüberwachungsgröße, insbesondere die Produktkosten, bei der Regelung wenigstens einer anderen Verarbeitungsregelungsgröße gemäß dem wenigstens einem Regelungskriterium oder auf den wenigstens einen vorbestimmten Sollwert, wenigstens einen vorbestimmten Überwachungsgrenzwert nicht über- oder unterschreitet.

12. Vorrichtung nach wenigstens einem der vorangegangenen Ansprüche,
**dadurch gekennzeichnet, dass**
die Prozessoreinrichtung (14) auf der Basis des wenigstens einen Istwerts und/oder der Historie wenigstens einer Verarbeitungsmess-, -überwachungs- und/oder -regelungsgröße, und wenigstens eines Erfahrungs- und/oder Benutzergrenzwerts für diese Größe, wie insbesondere der maximalen Viskosität des in hydraulischen Einrichtungen verwendeten Öls oder des maximalen Energieeinsatzes pro Produktionszyklus, wenigstens einen - bevorzugt über die Ausgabeeinrichtung (16) ausgebbaren - Grenzwert für maximale Anzahl weiterer Produktzyklen ermittelt, bevor eine Wartung, Kalibrierung und/oder ein Austausch von Teilen der Vorrichtung, insbesondere der Formgebungseinrichtung, nötig ist, um dadurch Wartungs- und Instandsetzungskosten durch Orientierung am entsprechenden Istbedarf zu minimieren.

13. Vorrichtung nach wenigstens einem der vorangegangenen Ansprüche,
**dadurch gekennzeichnet, dass**
die Regelung einer Verarbeitungsregelungsgröße dadurch erfolgt, dass die Prozessoreinrichtung (14) anhand wenigstens einer Kennfunktion dieser Verarbeitungsregelungsgröße deren Abhängigkeit von wenigstens einer Verarbeitungssteuerungsgröße betrachtet und wenigstens ein Mess- oder Erfahrungswert wenigstens einer Verarbeitungssteuerungsgröße ermittelt wird, für welchen der jeweilige Kennfunktionswert gemäß dem jeweiligen Regelungskriterium minimal, maximal oder den geringsten Differenzbetrag zum vorgegebenen Sollwert aufweist.

14. Vorrichtung nach wenigstens einem der vorangegangenen Ansprüche,
**dadurch gekennzeichnet, dass**
bei der Regelung wenigstens einer Verarbeitungsregelungsgröße wenigstens eine Verarbeitungsüberwachungsgröße derart überwacht wird, dass die Prozessoreinrichtung (14) anhand wenigstens einer Kennfunktion der Verarbeitungsregelungsgröße deren Abhängigkeit von wenigstens einer Verarbeitungssteuerungsgröße und von der Verarbeitungsüberwachungsgröße betrachtet und wenigstens ein Optimalwert unter den Mess- oder Erfahrungswerten wenigstens einer Verarbeitungssteuerungsgröße ermittelt wird, für welchen einerseits der jeweilige Kennfunktionswert gemäß dem jeweiligen Regelungskriterium minimal, maximal oder den geringsten Differenzbetrag zum vorgegebenen Sollwert aufweist und andererseits wenigstens ein zu dem wenigstens einen Optimalwert gehöriger Mess- oder Erfahrungswert der Verarbeitungsüberwachungsgröße den - bevorzugt produktbezogenen - unteren und/oder oberen Erfahrungsgrenzwert und/oder Benutzergrenzwert nicht unter- bzw. überschreitet.

15. Vorrichtung nach wenigstens einem der vorangegangenen Ansprüche,
**dadurch gekennzeichnet, dass**
die Regelung wenigstens einer Verarbeitungsregelungsgröße automatisch erfolgt, indem die Steuerungseinrichtung (5) wenigstens einen Sollwert wenigstens einer Verarbeitungssteuerungsgröße auf wenigstens einen aus der wenigstens einen entsprechenden Kennfunktion ermittelten Optimalwert der wenigstens einen Verarbeitungssteuerungsgröße setzt.

16. Vorrichtung nach wenigstens einem der vorangegangenen Ansprüche,
**dadurch gekennzeichnet, dass**
die Regelung einer Verarbeitungsregelungsgröße manuell erfolgt, indem der wenigstens eine aus der wenigstens einen entsprechenden Kennfunktion ermittelte Optimalwert der wenigstens einen Verarbeitungssteuerungsgröße auf der Ausgabeeinrichtung (16) ausgegeben wird, damit der Bediener den wenigstens einen Sollwert der wenigstens einen entsprechenden Verarbeitungssteuerungsgröße über die Eingabeeinrichtung (130) selbst entsprechend verändern kann.

17. Vorrichtung nach wenigstens einem der vorangegangenen Ansprüche,
**dadurch gekennzeichnet, dass**
die Vorrichtung in wenigstens einem - bevorzugt produktbezogenen - Modus maximaler Ausstoßrate betrieben werden kann, in welchem die Produktzyklusdauer als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

18. Vorrichtung nach wenigstens einem der vorangegangenen Ansprüche,
**dadurch gekennzeichnet, dass**
die Vorrichtung in wenigstens einem - bevorzugt produktbezogenen - Modus minimaler Produktkosten betrieben werden kann, in welchem die Produktkosten als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

19. Vorrichtung nach wenigstens einem der vorangegangenen Ansprüche,
**dadurch gekennzeichnet, dass**
die Vorrichtung in wenigstens einem - bevorzugt produktbezogenen - Modus minimalen Energieeinsatzes pro Produktzyklus betrieben werden kann, in welchem der Energieeinsatz pro Produktzyklus als Verarbeitungsregelungsgröße auf dessen Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

20. Vorrichtung nach wenigstens einem der vorangegangenen Ansprüche,
**dadurch gekennzeichnet, dass**
wenigstens zwei Verarbeitungsüberwachungsgrößen als Verarbeitungsregelungsgrößen gemäß wenigstens einer vorbestimmten Kombination aus den genannten oder dergleichen Regelungskriterien geregelt werden, insbesondere indem die Prozessoreinrichtung (14) - bevorzugt aus der wenigstens einen Kennfunktion oder in dem wenigstens einen Lernmodus - wenigstens einen Optimalwert wenigstens einer Verarbeitungssteuerungsgröße für den optimalen Produktzyklus ermittelt, für den zugleich Produktzyklusdauer, Material- und Energieeinsatz pro Produktzyklus minimal sind.

21. Vorrichtung nach wenigstens einem der vorangegangenen Ansprüche,
**dadurch gekennzeichnet, dass**
die Steuerungseinrichtung (5) mit wenigstens einem Datennetz (100), insbesondere einem Intranet oder dem Internet verbindbar ist und durch die Steuerungseinrichtung (5) wenigstens ein Daten-Dienst im Datennetz (100) zur Verfügung gestellt wird, welcher einer Gruppe entnommen ist, die Web- und/oder XML-Server-Dienste, FTP-Server-Dienste, SQL-Server-Dienste, E-Mail-Dienste, Applikationsserver-Dienste, insbesondere J2EE-Dienste, File-Server-Dienste, insbesondere WebDAV-, SMB-, NFS- oder AFP-Server-Dienste und dergleichen enthält und/oder dass die Steuerungseinrichtung (5) als Endgerät (Client) für den wenigstens einen Daten-Dienst fungiert.

22. Vorrichtung nach wenigstens einem der vorangegangenen Ansprüche,
**dadurch gekennzeichnet, dass**
durch die Steuerungseinrichtung (5) mittels wenigstens eines der Datendienste in dem wenigstens einen Datennetz (100) wenigstens eine Verarbeitungssteuerungs-, mess-, überwachungs- und/oder -regelungsgröße, wie insbesondere Produktzyklusdauer, Produktkosten, Produktqualität, Rohmaterial- und/oder Energieeinsatz pro Produktzyklus, zu erwartender Rohmaterialbedarf, zu erwartende Produktionsdauer und/oder zu erwartenden Gestehungskosten für eine vorgegebene Menge eines vorbestimmten Produktes, Produktfehlerwahrscheinlichkeit, Produktfehlerhäufigkeit, die Anzahl von Produktzyklen bis zu einer Wartung, Kalibrierung und/oder einem Austausch von Teilen der Vorrichtung, insbesondere der Formgebungseinrichtung, Wartungs- und Instandsetzungskosten, Produktionsanfahrzeit und/oder -kosten, im Wesentlichen in Echtzeit zur Verfügung gestellt wird.

23. Verfahren, insbesondere Extrusions- oder Spritzgussverfahren, zur benutzerspezifischen Überwachung der Verarbeitung von Kunststoffen in einer vorbestimmten Abfolge einzelner, über vorbestimmte Prozessparameter steuerbarer Verarbeitungsprozesse mit:
- wenigstens einem Materialzuführungsschritt, welcher als wenigstens ein Verarbeitungsprozess den zu verarbeitenden Kunststoff als Rohmaterial zuführt;
- wenigstens einem Plastifizierschritt, welcher als wenigstens ein weiterer Verarbeitungsprozess das zugeführte Rohmaterial plastifiziert und/oder homogenisiert;
- wenigstens einem Formgebungsschritt, welcher das plastifizierte und/oder homogenisierte Rohmaterial als wenigstens ein weiterer Verarbeitungsprozess zu einem Produkt formt, welches nach einer vorbestimmten Abkühl- und/oder Aushärtezeit entnehmbar ist, wobei - nach einem Produktionsanfahrschritt - die Abfolge der Verarbeitungsprozesse zwischen Zuführung des Rohmaterials und der Entnahme des Produkts einen Produktzyklus definieren,
- wenigstens einem, die Verarbeitung über wenigstens eine Verarbeitungssteuergröße, nämlich über wenigstens einen der Prozessparameter, steuernden Steuerungsschritt,
- wenigstens einem Eingabeschritt, durch den wenigstens ein Wert einer Verarbeitungseingabegröße, wie insbesondere die Kosten des Verfahrens, des Rohmaterials, der Energie, des Formgebungssschritts, der Abschreibung, der Zinsen und/oder des Personals, Verarbeitungsmenge eingegeben und wenigstens ein Sollwert wenigstens einer Verarbeitungssteuerungsgröße vorgegeben wird,
- wenigstens einem Prozessierungsschritt, durch den aus wenigstens einer vorbestimmten Verarbeitungssteuerungsgröße und wenigstens einer vorbestimmten Verarbeitungseingabegröße wenigstens eine vorbestimmte Verarbeitungsüberwachungsgröße, wie insbesondere Produktzyklusdauer, Produktkosten, Produktqualität, Rohmaterial- und/oder Energieeinsatz pro Produktzyklus, zu erwartender Rohmaterialbedarf, zu erwartende Produktionsdauer und/oder zu erwartenden Gestehungskosten für eine vorgegebene Menge eines vorbestimmten Produktes, Produktfehlerwahrscheinlichkeit, Produktfehlerhäufigkeit, die Anzahl von Produktzyklen bis zu einer Wartung, Kalibrierung und/oder einem Austausch von Teilen der Vorrichtung, insbesondere der Formgebungseinrichtung, Wartungs- und Instandsetzungskosten, Produktionsanfahrzeit und/oder -kosten, im Wesentlichen in Echtzeit ermittelt wird,
- und wenigstens einem Ausgabeschritt, durch den wenigstens ein Wert wenigstens einer Verarbeitungsüberwachungsgröße, insbesondere der Ist-, Soll-, Durchschnittswert, der seit dem Beginn des Verfahrens integrierte Wert und/oder dessen Historie, und/oder die Tendenz ausgegeben, und bevorzugt über Kennfeld dargestellt wird,
- **dadurch gekennzeichnet, dass** die Prozessoreinrichtung (14) mit wenigstens einer Speichereinrichtung (17) datenverbunden ist, in welcher für wenigstens eine Verarbeitungsüberwachungsgröße wenigstens ein unterer und/oder ein oberer produktbezogener Erfahrungsgrenzwert gespeichert ist.

24. Verfahren gemäß Anspruch 23 ferner zur benutzerspezifischen Regelung der Verarbeitung von Kunststoffen,
**dadurch gekennzeichnet, dass**
wenigstens eine Verarbeitungsüberwachungsgröße als Verarbeitungsregelungsgröße gemäß wenigstens einem - bevorzugt in dem Eingabeschritt- vorgebbaren Regelungskriterium oder auf wenigstens einen vorgebbaren Sollwert geregelt wird.

## Claims

1. An apparatus, in particular an extrusion or injection moulding machine, for user-specific monitoring of the processing of plastic materials in a predetermined sequence of individual processing operations which can be controlled by predetermined process parameters, with:
- at least one material supply device (1), which supplies the plastic material as raw material in at least one processing operation;
- at least one plasticizing device (2), which plasticizes and/or homogenizes the supplied raw material in at least one additional processing operation;
- at least one moulding device (3), in particular an injection moulding tool, which forms the plasticized and/or homogenized raw material in at least one additional processing operation into a product that is removed from the moulding device (3) after a predetermined cool-down and/or hardening time, wherein - after a predetermined production startup time of the apparatus - the sequence of the processing operations between supply of the raw material and removal of the product define a product cycle,
- at least one control device (5) controlling the processing via at least one process control quantity - namely via at least one of the process parameters - which control device is in data-related connection with at least one input device (130) via which at least one value of a process input quantity, such as in particular the costs of the apparatus, the raw material, the energy, the moulding devices, the depreciation, the interest and/or the personnel, process quantity, are inputted and at least one desired value of at least one process control quantity can be preset,
- at least one processor device (14) in data-related connection with the control device (5), by which from at least one predetermined process control quantity and at least one predetermined process input quantity at least one predetermined process monitoring quantity, such as in particular product cycle duration, product costs, product quality, raw material and/or energy usage per product cycle, expected raw material requirement, expected production duration and/or expected production costs for a predetermined quantity of a predetermined product, product error probability, product error rate, the number of product cycles until servicing, calibration and/or an exchange of parts of the apparatus, in particular of the moulding device, servicing and repair costs, production startup time and/or -costs, can be determined substantially in real time,
- wherein the control device (5) is in data-related connection with at least one output device (16), via which at least one value of at least one process monitoring quantity, in particular the actual, desired, average value, the integrated value since startup of the apparatus and/or its history, and/or the trend, can be outputted, and preferably can be displayed by characteristic diagram,
- and **characterized in that** the processor device (14) is in data-related connection with at least one storage device (17), in which at least one lower and/or at least one upper product-related experience limit value is stored for at least one process monitoring quantity.

2. The apparatus according to Claim 1, further for user-specific regulation of the processing of plastic materials,
**characterized in that**
at least one process monitoring quantity is regulated as process regulating quantity, by the control device (5) in addition being able to be in data-related connection with at least one regulating device (15), which regulates at least one process regulating quantity according to at least one presettable - preferably via the input device (130) - regulating criterion or to at least one presettable desired value.

3. The apparatus according to at least one of the preceding claims,
**characterized in that**
the at least one regulating criterion is taken from a group which comprises at least minimum product cycle duration, i.e. greatest product output rate, minimum energy usage per product cycle, minimum product costs, minimum production costs for a predetermined quantity of a predetermined product, maximum product quality, maximum number of product cycles until servicing, calibration and/or exchange of parts of the apparatus, minimum servicing and repair costs and/or minimum production startup time and/or -costs.

4. The apparatus according to at least one of the preceding claims,
**characterized in that**
the processor device (14) can be in data-related connection with at least one storage device (17), in which at least one lower and/or at least one upper - preferably product-related - experience limit value is stored for at least one process regulating quantity.

5. The apparatus according to at least one of the preceding claims,
**characterized in that**
the processor device (14) monitors, while regulating at least one process regulating quantity, at least one process monitoring quantity such that its actual values do not fall below or respectively exceed the at least one lower and/or upper experience limit value and/or the at least one - preferably via the input device (130) - presettable lower and/or upper - preferably product-related - user limit value.

6. The apparatus according to at least one of the preceding claims,
**characterized in that**
if the actual value of the at least one process monitoring quantity exceeds or falls below, in particular exceeds or falls below substantially permanently over a predeterminable number of the product cycles, at least one experience and/or user limit value, the control device (5) emits a corresponding warning signal and/or a warning message via the output device (16) and/or controls the apparatus to a safe state or switches the apparatus off.

7. The apparatus according to at least one of the preceding claims,
**characterized in that**
the control device (5) is able to be in data-related connection with at least one measurement device (13), which measures - controlled by the control device (5) - at least one predetermined process measurement quantity continuously or at predetermined points in time during at least one predetermined processing operation within at least one predetermined product cycle, which process measurement quantity is taken from a group which comprises at least errors, downtimes, in particular setup and maintenance times, and/or power consumption of the apparatus, temperature, wear, downtimes and/or faults of the moulding device, temperature and/or usage of the coolant employed for cooling down the product, duration of at least one of the processing operations, ambient temperature, viscosity of the oil used for at least one hydraulic device of the apparatus, and suchlike.

8. The apparatus according to at least one of the preceding claims,
**characterized in that**
the processor device (14) can determine by means of the at least one process measurement quantity at least one actual value of at least one predetermined process control, -monitoring and/or -regulating quantity, in particular the product cycle duration and/or the energy usage per product cycle, as well as preferably the deviation of the respective actual value from the corresponding desired value.

9. The apparatus according to at least one of the preceding claims,
**characterized in that**
at least one dependence of at least one process monitoring or regulating quantity on at least one process control quantity and/or at least one other process monitoring and/or -regulating quantity is stored in the storage device (17) as at least one characteristic function in the form of a predetermined number of discrete - preferably product-related - experience value tuples.

10. The apparatus according to at least one of the preceding claims,
**characterized in that**
the apparatus can be operated in at least one - preferably product-related - learning mode, in which at least one predetermined process measurement quantity is measured by means of the at least one measurement device (13) in at least one measurement series, with automatic changing of the desired value of at least one predetermined process control quantity, after at least one product cycle in predetermined steps and if applicable predetermined fixed values of at least one other process control quantity, by means of which the processor device (14) determines the at least one thereby arising actual value of at least one predetermined process regulating and/or -monitoring quantity and thereby at least one characteristic function, which is stored in the storage device (17) in the form of a predetermined number of discrete - preferably product-related - experience value tuples.

11. The apparatus according to at least one of the preceding claims,
**characterized in that**
the processor device (14) determines on the basis of the at least one measurement series for the at least one process input quantity at least one limit value - preferably able to be outputted via the output device (16) -, for which at least one process monitoring quantity, in particular the product costs, does not exceed or fall below at least one predetermined monitoring limit value during the regulation of at least one other process regulating quantity according to the at least one regulating criterion or to the at least one predetermined desired value.

12. The apparatus according to at least one of the preceding claims,
**characterized in that**
the processor device (14) determines, on the basis of the at least one actual value and/or the history of at least one process measurement, monitoring and/or regulating quantity, and at least one experience and/or user limit value for this quantity, such as in particular of the maximum viscosity of the oil used in hydraulic devices or of the maximum energy usage per product cycle, at least one limit value - preferably able to be outputted via the output device (16)-, for a maximum number of additional process cycles, before servicing, calibration and/or an exchange of parts of the apparatus, in particular of the moulding device, is required, in order to thereby minimize servicing and repair costs by orientation to the corresponding actual need.

13. The apparatus according to at least one of the preceding claims,
**characterized in that**
the regulation of a process regulating quantity takes place **in that** the processor device (14) considers by means of at least one characteristic function of this process regulating quantity its dependence on at least one process control quantity and at least one measurement- or experience value of at least one process control quantity is determined, for which the respective characteristic function value according to the respective regulating criterion is a minimum, a maximum or has the smallest difference amount to the predetermined desired value.

14. The apparatus according to at least one of the preceding claims,
**characterized in that**
while regulating at least one process regulating quantity, at least one process monitoring quantity is monitored such that the processor device (14) considers by means of at least one characteristic function of the process regulating quantity its dependence on at least one process control quantity and on the process monitoring quantity, and at least one optimum value among the measurement- or experience values of at least one process control quantity is determined, for which on the one hand the respective characteristic function value according to the respective regulating criterion is a minimum, a maximum or has the smallest difference amount to the predetermined desired value, and on the other hand at least one measurement- or experience value of the process monitoring quantity associated with the at least one optimum value does not fall below or respectively exceed at least the - preferably product-related - lower and/or upper experience limit value and/or user limit value.

15. The apparatus according to at least one of the preceding claims,
**characterized in that**
the regulation of at least one process regulating quantity takes place automatically, by the control device (5) setting at least one desired value of at least one process control quantity to at least one optimum value of the at least one process control quantity determined from the at least one corresponding characteristic function.

16. The apparatus according to at least one of the preceding claims,
**characterized in that**
the regulation of at least one process regulating quantity takes place manually, by the at least one optimum value of the at least one process control quantity determined from the at least one corresponding characteristic function being outputted on the output device (16), so that the operator himself can change accordingly the at least one desired value of the at least one corresponding process control quantity via the input device (130).

17. The apparatus according to at least one of the preceding claims,
**characterized in that**
the apparatus can be operated in at least one - preferably product-related - mode having a maximum output rate, in which the product cycle duration as process regulating quantity is regulated to its minimum value and the product quality as process monitoring quantity is monitored such that it does not fall below at least the - preferably product-related - lower experience- or operator limit value.

18. The apparatus according to at least one of the preceding claims,
**characterized in that**
the apparatus can be operated in at least one - preferably product-related - mode having minimum product costs, in which the product costs as process regulating quantity are regulated to the minimum value thereof and the product quality as process monitoring quantity is monitored such that it does not fall below at least the - preferably product-related - lower experience- or operator limit value.

19. The apparatus according to at least one of the preceding claims,
**characterized in that**
the apparatus can be operated in at least one - preferably product-related - mode having minimum energy usage per product cycle, in which the energy usage per product cycle is regulated as process regulating quantity to its minimum value and the product quality is monitored as process monitoring quantity such that it does not fall below at least the - preferably product related - lower experience- or operator limit value.

20. The apparatus according to at least one of the preceding claims,
**characterized in that**
at least two process monitoring quantities are regulated as process regulating quantities according to at least one predetermined combination of the mentioned or similar regulating criteria, in particular by the processor (14) - preferably from the at least one characteristic function or in the at least one learning mode - determining at least one optimum value of at least one process control quantity for the optimum product cycle, for which, at the same time, product cycle duration, material- and energy usage per product cycle are a minimum.

21. The apparatus according to at least one of the preceding claims,
**characterized in that** the control device (5) is able to be connected with at least one data network (100), in particular an intranet or the Internet, and at least one data service is provided in the data network (100) by the control device (5), which data service is taken from a group which comprises Web and/or XML server services, FTP server services, SQL server services, email services, application server services, in particular J2EE services, file server services, in particular WebDAV, SMB, NFS or AFP server services and suchlike, and/or that the control device (5) operates as a terminal (client) for the at least one data service.

22. The apparatus according to at least one of the preceding claims,
**characterized in that**
the control device (5) provides substantially in real time by means of at least one of the data services in the at least one data network (100) at least one process control, measurement, monitoring and/or regulating quantity, such as in particular product cycle duration, product costs, product quality, raw material and/or energy usage per product cycle, expected raw material requirement, expected production duration and/or expected production costs for a predetermined quantity of a predetermined product, product error probability, product error rate, the number of product cycles until servicing, calibration and/or an exchange of parts of the apparatus, in particular of the moulding device, maintenance and repair costs, production startup time and/or -costs.

23. A method, in particular an extrusion or injection moulding method, for user-specific monitoring of the processing of plastic materials in a predetermined sequence of individual processing operations which can be controlled via predetermined process parameters, with:
- at least one material supply step which, as at least one processing operation, supplies the plastic material to be processed as raw material;
- at least one plasticizing step which, as at least one additional processing operation, plasticizes and/or homogenizes the supplied raw material;
- at least one moulding step which, as at least one additional processing operation, forms the plasticized and/or homogenized raw material into a product that can be removed after a predetermined cool-down and/or hardening time, wherein - after a production startup step - the sequence of the processing operations between supply of the raw material and the removal of the product define a product cycle,
- at least one control step controlling the processing via at least one process control quantity - namely via at least one of the process parameters,
- at least one input step, by which at least one value of a process input quantity, such as in particular the costs of the process, raw material, energy, moulding step, depreciation, interest and/or personnel, process quantity is inputted, and at least one desired value of at least one process control quantity is preset,
- at least one processing step, by which, from at least one predetermined process control quantity and at least one predetermined process input quantity, at least one predetermined process monitoring quantity such as in particular product cycle duration, product costs, product quality, raw material and/or energy usage per product cycle, expected raw material requirement, expected production duration and/or expected production costs for a predetermined quantity of a predetermined product, product error probability, product error rate, the number of product cycles until servicing, calibration and/or an exchange of parts of the apparatus, in particular of the moulding device, maintenance and repair costs, production startup time and/or -costs is determined substantially in real time,
- and at least one output step, by which at least one value of at least one process monitoring quantity, in particular the actual value, desired value, average value, the integrated value since the start of the method and/or its history, and/or the trend, is outputted, and preferably displayed by characteristic diagram,
**characterized in that**
- the processor device (14) is in data-related connection with at least one storage device (17), in which for at least one process monitoring quantity at least one lower and/or at least one upper product-related experience limit value is stored.

24. The method according to Claim 23, further for user-specific regulation of the processing of plastic materials,
**characterized in that**
at least one process monitoring quantity is regulated as process regulating quantity according to at least one presettable - preferably in the input step - regulating criterion or to at least one predeterminable desired value.

## Revendications

1. Dispositif, en particulier machine d'extrusion ou de moulage par injection, pour la surveillance spécifique à un utilisateur de l'usinage de plastiques dans une séquence prédéterminée de processus d'usinage individuels pouvant être commandés par des paramètres de processus prédéterminés comprenant :
- au moins un dispositif d'alimentation de matière (1) qui alimente le plastique à usiner en tant que matière brute dans au moins un processus d'usinage ;
- au moins un dispositif de plastification (2) qui plastifie et/ou homogénéise la matière brute alimentée dans au moins un autre processus d'usinage ;
- au moins un dispositif de mise en forme (3), en particulier un outil de moulage par injection qui forme dans au moins un autre processus d'usinage, la matière brute plastifiée et/ou homogénéisée en un produit qui est prélevé du dispositif de mise en forme (3) après un temps de refroidissement et/ou de durcissement prédéterminé, dans lequel, après un temps de démarrage de production prédéterminé du dispositif, la séquence des processus d'usinage définit un cycle de produit entre l'alimentation de la matière brute et le prélèvement du produit ,
- au moins un dispositif de commande (5) commandant l'usinage par le biais d'au moins une grandeur de commande d'usinage, à savoir par au moins un des paramètres de processus, lequel est en liaison de données avec au moins un dispositif de saisie (130), par lequel au moins une valeur d'une grandeur de saisie d'usinage, comme en particulier les coûts du dispositif, de la matière brute, de l'énergie, des dispositifs de mise en forme, de l'amortissement, des intérêts et/ou du personnel, une quantité usinée peuvent être saisis et au moins une valeur de consigne d'au moins une grandeur de commande d'usinage peut être prédéfinie,
- au moins un dispositif de processeur (14) en liaison de données avec le dispositif de commande (5), avec lequel, à partir d'au moins une grandeur de commande d'usinage prédéterminée et d'au moins une grandeur de saisie d'usinage prédéterminée, au moins une grandeur de surveillance d'usinage prédéterminée, comme en particulier la durée du cycle du produit, les coûts du produit, la qualité du produit, l'utilisation de la matière brute et/ou de l'énergie par cycle de produit, les besoins à prévoir en matière brute, la durée de production à prévoir et/ou les coûts de revient à prévoir pour une quantité prédéfinie d'un produit prédéfini, la probabilité d'erreurs de produits, la fréquence d'erreurs de produits, le nombre de cycles de produits jusqu'à une maintenance, un étalonnage et/ou un changement de pièces du dispositif, en particulier du dispositif de mise en forme, les coûts de maintenance et de réparation, le temps et/ou les coûts de démarrage de production, peut être calculée, en particulier en temps réel,
- dans lequel le dispositif de commande (5) est en liaison de données avec au moins un dispositif de sortie (16) par lequel au moins une valeur d'au moins une grandeur de surveillance d'usinage, en particulier la valeur réelle, de consigne, moyenne, la valeur intégrée depuis le démarrage du dispositif et/ou son historique et/ou la tendance peut être sortie, et représentée en particulier par un diagramme caractéristique,
- et **caractérisé en ce que** le dispositif de processeur (14) est en liaison de données avec au moins un dispositif de mise en mémoire (17) dans lequel pour au moins une grandeur de surveillance d'usinage, au moins une valeur limite empirique basse et/ou haute liée au produit est enregistrée.

2. Dispositif selon la revendication 1, en outre pour le réglage spécifique à un utilisateur de l'usinage de plastiques,
**caractérisé en ce**
**qu'**au moins une grandeur de surveillance d'usinage est réglée en tant que grandeur de réglage d'usinage, en ce que le dispositif de commande (5) peut être en outre en liaison de données avec au moins un dispositif de réglage (15), lequel règle au moins une grandeur de réglage d'usinage selon au moins un critère de réglage prédéfinissable, de préférence par le biais du dispositif de saisie (130) ou à au moins une valeur de consigne prédéfinissable.

3. Dispositif selon au moins l'une des revendications précédentes,
**caractérisé en ce qu'**au moins un critère de réglage est pris dans un groupe qui contient au moins la durée de cycle de produit minimale, c'est à dire la plus grande vitesse d'éjection de produits, l'utilisation minimale d'énergie par cycle de produit, les coûts de produit minimaux, les coûts de revient minimaux pour une quantité prédéfinie d'un produit prédéterminé, la qualité de produit maximale, le nombre maximal de cycles de produits jusqu'à une maintenance, un étalonnage et/ou un changement de pièces du dispositif, les coûts minimaux de maintenance et de réparation, le temps et/ou les coûts minimaux de démarrage de production.

4. Dispositif selon au moins l'une des revendications précédentes,
**caractérisé en ce que** le dispositif de processeur (14) peut être en liaison de données avec au moins un dispositif de mise en mémoire (17), dans lequel pour au moins une grandeur de réglage d'usinage, au moins une valeur limite empirique basse et/ou haute liée au produit est enregistrée.

5. Dispositif selon au moins l'une des revendications précédentes,
**caractérisé en ce que** le dispositif de processeur (14), lors du réglage d'au moins une grandeur de réglage d'usinage, surveille au moins une grandeur de surveillance d'usinage de telle façon que ses valeurs réelles ne sont pas en-deça, respectivement au-dessus de l'au moins une valeur limite empirique basse et/ou haute et/ou au moins une valeur limite d'utilisateur basse et/ou haute, de préférence liée au produit, prédéfinissable, de préférence par le dispositif de saisie (130).

6. Dispositif selon au moins l'une des revendications précédentes,
**caractérisé en ce que** le dispositif de commande (5), lors du passage en-deça ou au-dessus d'au moins une valeur limite empirique et/ou valeur limite d'utilisateur par la valeur réelle de l'au moins une grandeur de surveillance d'usinage, en particulier lors d'un passage en-deça ou au-dessus essentiellement durable sur un nombre prédéfinissable de cycles de produits, émet un signal d'avertissement et/ou un message d'avertissement correspondant par le biais du dispositif de sortie (16) et/ou commande et ou arrête le dispositif dans un état de sécurité.

7. Dispositif selon au moins l'une des revendications précédentes,
**caractérisé en ce que** le dispositif de commande (5) peut être en outre en liaison de données avec au moins un dispositif de mesure (13), lequel, commandé par le dispositif de commande (5), mesure en continu ou à des intervalles prédéterminés durant au moins un processus d'usinage prédéterminé à l'intérieur d'au moins un cycle de produit prédéterminé au moins une valeur de mesure d'usinage prédéterminée, qui est prise dans un groupe qui contient au moins des erreurs, des temps d'arrêt, en particulier des temps de préparation et de maintenance, et/ou la puissance absorbée du dispositif, la température, l'usure, les temps d'attente et/ou les erreurs du dispositif de mise en forme, la température et/ou la consommation du réfrigérant employé pour refroidir le produit, la durée d'au moins un des processus d'usinage, la température environnante, la viscosité de l'huile utilisée pour au moins une installation hydraulique du dispositif et similaires.

8. Dispositif selon au moins l'une des revendications précédentes,
**caractérisé en ce que** le dispositif de processeur (14), à l'aide de l'au moins une grandeur de mesure d'usinage peut calculer au moins une valeur réelle d'au moins une grandeur de commande, de surveillance et/ou de réglage d'usinage prédéterminée, en particulier la durée de cycle de produit et/ou l'utilisation d'énergie par cycle de produit, ainsi que de préférence, l'écart de la valeur réelle respective par rapport à la valeur de consigne correspondante.

9. Dispositif selon au moins l'une des revendications précédentes,
**caractérisé en ce qu'**au moins une dépendance d'au moins une grandeur de surveillance et/ou de réglage d'usinage d'au moins une grandeur de commande d'usinage et/ou d'au moins une autre grandeur de surveillance et/ou de réglage d'usinage en tant qu'au moins une fonction caractéristique sous forme d'un nombre prédéterminé de tuple de valeur empirique discrète, de préférence lié au produit, est enregistrée dans le dispositif de mise en mémoire (17) .

10. Dispositif selon au moins l'une des revendications précédentes,
**caractérisé en ce que** le dispositif peut être exploité dans au moins un mode d'apprentissage, de préférence lié au produit, dans lequel dans au moins une rangée de mesures lors de la modification automatique de la valeur de consigne d'au moins une grandeur de commande d'usinage prédéterminée après au moins un cycle de produit dans des étapes prédéterminées et le cas échéant des valeurs fixes prédéterminées d'au moins une autre grandeur de commande d'usinage, au moyen de l'au moins un dispositif de mesure (13), au moins une grandeur de mesure d'usinage prédéterminée est mesurée à l'aide de laquelle le dispositif de processeur (14) calcule au moins l'une valeur réelle produite alors d'au moins une grandeur de réglage et/ou de surveillance d'usinage prédéterminée et ainsi au moins une fonction caractéristique qui est enregistrée dans le dispositif de mise en mémoire (17) sous forme d'un nombre prédéterminé de tuple de valeur de mesure discrètes, de préférence lié au produit

11. Dispositif selon au moins l'une des revendications précédentes,
**caractérisé en ce que** le dispositif de processeur (14), sur la base de l'au moins une rangée de mesures pour l'au moins une grandeur de saisie d'usinage, calcule au moins une valeur limite, prédéfinissable, de préférence par le biais du dispositif de sortie (16), pour laquelle au moins une grandeur de surveillance d'usinage, en particulier les coûts de produit, lors du réglage d'au moins une autre grandeur de réglage d'usinage selon l'au moins un critère de réglage ou sur l'au moins une valeur de consigne prédéfinie, n'est pas en-deçà ou au-dessus d'au moins une valeur limite de surveillance prédéfinie.

12. Dispositif selon au moins l'une des revendications précédentes,
**caractérisé en ce que** le dispositif de processeur (14), sur la base de l'au moins une valeur réelle et/ou de l'historique d'au moins une grandeur de mesure, de surveillance et/ou de réglage, et au moins d'une valeur limite empirique et/ou valeur limite d'utilisateur pour cette grandeur, comme en particulier la viscosité maximale de l'huile utilisée dans des installations hydrauliques ou l'utilisation d'énergie maximale par cycle de produit, calcule au moins une valeur limite, de préférence pouvant être sortie par le biais du dispositif de sortie (16), pour le nombre maximal d'autres cycles de produit, avant qu'une maintenance, un étalonnage et/ou un changement de pièces du dispositif, en particulier du dispositif de mise en forme, ne soit nécessaire, afin de réduire ainsi les coûts de maintenance et de réparation par une orientation sur les besoins réels correspondants.

13. Dispositif selon au moins l'une des revendications précédentes,
**caractérisé en ce que** le réglage d'une grandeur de réglage d'usinage est exécuté **en ce que** le dispositif de processeur (14), à l'aide d'au moins une fonction caractéristique de cette grandeur de réglage d'usinage, observe sa dépendance d'au moins une grandeur de commande d'usinage et au moins une valeur de mesure ou empirique d'au moins une grandeur de commande d'usinage est calculée pour laquelle la valeur de fonction caractéristique respective présente, selon le critère de réglage respectif, au minimum, au maximum ou bien le montant de différence le plus faible par rapport à la valeur de consigne prédéfinie.

14. Dispositif selon au moins l'une des revendications précédentes,
**caractérisé en ce que** lors du réglage d'au moins une grandeur de réglage d'usinage, au moins une grandeur de surveillance d'usinage est surveillée de telle sorte que le dispositif de processeur (14), à l'aide d'au moins une fonction caractéristique de la grandeur de réglage d'usinage, observe sa dépendance d'au moins une grandeur de commande d'usinage de la grandeur de surveillance d'usinage, et au moins une valeur optimale parmi les valeurs de mesure ou empiriques d'au moins une grandeur de commande d'usinage est calculée pour laquelle d'une part la valeur de fonction caractéristique présente, selon le critère de réglage respectif, au minimum, au maximum ou bien le montant de différence le plus faible par rapport à la valeur de consigne prédéfinie et d'autre part, au moins une valeur de mesure ou empirique de la grandeur de surveillance d'usinage, appartenant à l'au moins une valeur optimale, n'est pas en-deça ou au-dessus de la valeur limite empirique et/ou valeur limite d'utilisateur basse et/ou haute, de préférence liée au produit.

15. Dispositif selon au moins l'une des revendications précédentes,
**caractérisé en ce que** le réglage d'au moins une grandeur de réglage d'usinage est exécuté automatiquement, **en ce que** le dispositif de commande (5) place au moins une valeur de consigne d'au moins une grandeur de commande d'usinage sur au moins une valeur optimale de l'au moins une grandeur de commande d'usinage calculée à partir de l'au moins une fonction caractéristique correspondante.

16. Dispositif selon au moins l'une des revendications précédentes,
**caractérisé en ce que** le réglage d'une grandeur de réglage d'usinage est exécuté manuellement, **en ce que** l'au moins une valeur optimale de l'au moins une grandeur de commande d'usinage calculée à partir de l'au moins une fonction caractéristique correspondante est sortie sur le dispositif de sortie (16), afin que l'utilisateur puisse modifier lui-même en conséquence l'au moins une valeur de consigne de l'au moins une grandeur de commande d'usinage correspondante par le biais du dispositif de saisie (130).

17. Dispositif selon au moins l'une des revendications précédentes,
**caractérisé en ce que** le dispositif peut être exploité à une vitesse d'éjection maximale, dans au moins un mode, de préférence lié au produit, dans lequel la durée de cycle de produit est réglée à sa valeur minimale en tant que grandeur de réglage d'usinage et la qualité du produit est surveillée ainsi en tant que grandeur de surveillance d'usinage, de sorte qu'elle ne soit pas au moins en-deça de la valeur limite empirique ou d'utilisateur basse, de préférence liée au produit.

18. Dispositif selon au moins l'une des revendications précédentes,
**caractérisé en ce que** le dispositif peut être exploité à des coûts de produit minimaux, dans au moins un mode, de préférence lié au produit, dans lequel les coûts de produit sont réglés à leur valeur minimale en tant que grandeur de réglage d'usinage et la qualité du produit est surveillée en tant que grandeur de surveillance d'usinage de sorte qu'elle ne soit pas au moins en-deça de la valeur limite empirique ou d'utilisateur basse, de préférence liée au produit.

19. Dispositif selon au moins l'une des revendications précédentes,
**caractérisé en ce que** le dispositif peut être exploité à une utilisation d'énergie minimale par cycle de produit, dans au moins un mode, de préférence lié au produit, dans lequel l'utilisation d'énergie par cycle de produit est réglée à sa valeur minimale en tant que grandeur de réglage d'usinage et la qualité du produit est surveillée en tant que grandeur de surveillance d'usinage de sorte qu'elle ne soit pas au moins en-deça de la valeur limite empirique ou d'utilisateur basse, de préférence liée au produit.

20. Dispositif selon au moins l'une des revendications précédentes,
**caractérisé en ce qu'**au moins deux grandeurs de surveillance d'usinage sont réglées en tant que grandeurs de réglage d'usinage selon au moins une combinaison prédéterminée à partir desdits critères de réglage ou similaires, en particulier **en ce que** le dispositif de processeur (14), de préférence à partir de l'au moins une fonction caractéristique ou dans l'au moins un mode d'apprentissage, calcule au moins une valeur optimale d'au moins une grandeur de commande d'usinage pour le cycle de produit optimal, pour lequel tant la durée du cycle de produit, l'utilisation de matière et d'énergie par cycle de produit sont minimales.

21. Dispositif selon au moins l'une des revendications précédentes,
**caractérisé en ce que** le dispositif de commande (5) peut être relié à au moins un réseau de données (100), en particulier un intranet ou l'internet, et un service de données dans le réseau de données (100) est fourni par le dispositif de commande (5), qui peut être pris dans un groupe contenant les services de serveur web et/ou XML, les services de serveur FTP, les services de serveur SQL, les services d'e-mail, les services de serveur d'application, en particulier les services J2EE, les services de serveurs de fichiers, en particulier les services de serveur WebDAV, SMB, NFS ou AFP et similaires et/ou que le dispositif de commande (5) sert de terminal (client) pour l'au moins un service de données.

22. Dispositif selon au moins l'une des revendications précédentes,
**caractérisé en ce que** le dispositif de commande (5) fournit au moyen d'au moins un des services de données dans l'au moins un réseau de données (100), au moins une grandeur de commande, mesure, surveillance et/ou réglage d'usinage, comme en particulier la durée du cycle du produit, les coûts du produit, la qualité du produit, l'utilisation de la matière brute et/ou de l'énergie par cycle de produit, les besoins à prévoir en matière brute, la durée de production à prévoir et/ou les coûts de revient à prévoir pour une quantité prédéfinie d'un produit prédéterminé, la probabilité d'erreurs de produits, la fréquence d'erreurs de produits, le nombre de cycles de produits jusqu'à une maintenance, un étalonnage et/ou un changement de pièces du dispositif, en particulier du dispositif de mise en forme, les coûts de maintenance et de réparation, le temps et/ou les coûts de démarrage de production, peut être fournie, en particulier en temps réel.

23. Procédé, en particulier procédé d'extrusion ou de moulage par injection, pour la surveillance spécifique à un utilisateur de l'usinage de plastiques dans une séquence prédéterminée de processus d'usinage individuels pouvant être commandés par des paramètres de processus prédéterminés comprenant :
- au moins une étape d'alimentation de matière laquelle alimente le plastique à usiner sous forme de matière brute en tant qu'au moins un processus d'usinage ;
- au moins une étape de plastification qui plastifie et/ou homogénéise la matière brute alimentée en tant qu'au moins un autre processus d'usinage ;
- au moins une étape de mise en forme qui, en tant qu'un autre processus d'usinage, forme la matière brute plastifiée et/ou homogénéisée en un produit qui est peut être prélevé après un temps de refroidissement et/ou de durcissement prédéterminé, dans lequel, après un temps de démarrage de production, la séquence des processus d'usinage définit un cycle de produit entre l'alimentation de la matière brute et le prélèvement du produit,
- au moins une étape de commande commandant l'usinage par le biais d'au moins une grandeur de commande d'usinage, à savoir par au moins un des paramètres de processus,
- au moins une étape de saisie par laquelle au moins une valeur d'une grandeur de saisie d'usinage, comme en particulier le coût du procédé, la matière brute, l'énergie, l'étape de mise en forme, l'amortissement, les intérêts et/ou le personnel, la quantité usinée peuvent être saisis et au moins une valeur de consigne d'au moins une grandeur de commande d'usinage est prédéfinie,
- au moins une étape de traitement par laquelle, à partir d'au moins une grandeur de commande d'usinage prédéterminée et d'au moins une grandeur de saisie d'usinage prédéterminée, au moins une grandeur de surveillance d'usinage prédéterminée, comme en particulier la durée du cycle du produit, les coûts du produit, la qualité du produit, l'utilisation de la matière brute et/ou de l'énergie par cycle de produit, les besoins à prévoir en matière brute, la durée de production à prévoir et/ou les coûts de revient à prévoir pour une quantité prédéfinie d'un produit prédéterminé, la probabilité d'erreurs de produits, la fréquence d'erreurs de produits, le nombre de cycles de produits jusqu'à une maintenance, un étalonnage et/ou un changement de pièces du dispositif, en particulier du dispositif de mise en forme, les coûts de maintenance et de réparation, le temps et/ou les coûts de démarrage de production, peut être calculée, en particulier en temps réel,
- et au moins une étape de sortie, par laquelle au moins une valeur d'au moins une grandeur de surveillance d'usinage, en particulier la valeur réelle, de consigne, moyenne, la valeur intégrée depuis le début du procédé et/ou son historique et/ou la tendance peut être sortie, et représentée en particulier par un diagramme caractéristique,
- **caractérisé en ce que** le dispositif de processeur (14) est en liaison de données avec au moins un dispositif de mise en mémoire (17) dans lequel pour au moins une grandeur de surveillance d'usinage, au moins une valeur limite empirique basse et/ou haute liée au produit est enregistrée.

24. Procédé selon la revendication 23, en outre pour le réglage spécifique à un utilisateur de l'usinage de plastiques,
**caractérisé en ce**
**qu'**au moins une grandeur de surveillance d'usinage est réglée en tant que grandeur de réglage d'usinage, selon au moins un critère de réglage prédéfinissable, de préférence à l'étape de saisie, ou est réglée à au moins une valeur de consigne prédéfinissable.
